(19) **Europäisches Patentamt / European Patent Office / Office européen des brevets**

(11) **EP 2 162 829 B1**

(12) **FASCICULE DE BREVET EUROPEEN**

(45) Date de publication et mention
de la délivrance du brevet:
**15.08.2012 Bulletin 2012/33**

(51) Int Cl.:
**G06F 15/80** (2006.01) **G06F 9/34** (2006.01)

(21) Numéro de dépôt: **08774325.8**

(86) Numéro de dépôt international:
**PCT/EP2008/058141**

(22) Date de dépôt: **26.06.2008**

(87) Numéro de publication internationale:
**WO 2009/000880 (31.12.2008 Gazette 2009/01)**

(54) **DISPOSITIF D'ADRESSAGE POUR PROCESSEUR PARALLELE**

ADRESSIERUNGSVORRICHTUNG FÜR PARALLELPROZESSOR

ADDRESSING DEVICE FOR PARALLEL PROCESSOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.06.2007 FR 0704574**

(43) Date de publication de la demande:
**17.03.2010 Bulletin 2010/11**

(73) Titulaire: **THALES**
**92200 Neuilly-sur-Seine (FR)**

(72) Inventeur: **GAILLAT, Gérard**
**F-92370 Chaville (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**GB-A- 2 417 105 US-A- 5 581 777**

**Description**

La présente invention concerne un dispositif d'adressage pour processeur parallèle, applicable en particulier à des calculateurs parallèles de type SIMD.

Le terme SIMD se réfère à la classification des calculateurs parallèles introduite par Flynn. Il désigne un calculateur parallèle de type Single Instruction Multiple Data Stream (SIMD).

Dans le passé, une ou plusieurs cartes électroniques étaient nécessaires pour implémenter un SIMD. Aujourd'hui, un SIMD peut être implanté sur un circuit intégré unique, par exemple un FPGA ou un ASIC.

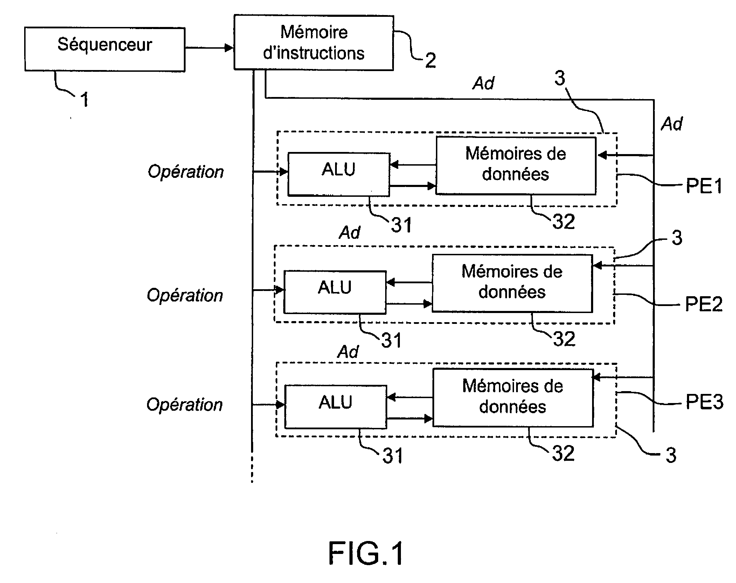

Un SIMD décrit en relation avec la figure 1, comporte
un seul séquenceur 1,
une seule mémoire d'instructions 2,
un grand nombre de processeurs élémentaires 3 ou Processing Elements (PEs).

Chaque PE 3 comporte
une Unité Arithmétique et Logique (ALU) 31,
un ensemble de mémoires et/ou de registres de données 32.

A chaque cycle, le séquenceur
détermine l'instruction suivante et la lit dans la mémoire d'instructions,
transmet cette instruction à tous les PEs.

La plupart des instructions définissent :

une opération à exécuter
l'adresse Ad où aller chercher chaque opérande de l'opération la ou les adresses Ad où stocker le résultat.

L'opération à exécuter comprend un ou plusieurs opérandes. Elle peut se limiter à une opération élémentaire (exemple une inversion de signe ou une addition ou un if ou un calcul de maximum) comprenant un ou plusieurs opérandes ou être la combinaison de plusieurs opérations élémentaires comprenant chacune un ou plusieurs opérandes (exemple: une multiplication suivie d'une addition). De même, le résultat peut être stocké à une ou plusieurs adresses.

Chaque PE exécute cette même instruction en même temps mais sur des données différentes, en l'occurrence sur l'ensemble de mémoires et/ou de registres qui lui appartient.

Bien entendu, lorsque nous disons à chaque cycle, nous parlons d'un cycle logique dont l'exécution peut s'étendre sur plusieurs cycles physiques selon la technique classique du pipeline. L'important est qu'une nouvelle instruction soit démarrée à chaque cycle et qu'une nouvelle instruction soit achevée à chaque cycle. Peut importe si l'exécution de l'instruction s'étend sur plusieurs cycles.

Considérons par exemple l'instruction R(23) = R(8) + R(3) * R(19). Elle signifie lire le contenu du registre 3, le multiplier par le contenu du registre 19, ajouter le résultat de cette multiplication au contenu du registre 8 et écrire le résultat de cette addition dans le registre 23. Cette même instruction va être exécutée en parallèle par tous les PEs. Mais chacun l'exécutera sur l'ensemble de registres qui lui appartient. Au total, s'il y a 128 PEs, l'exécution de l'instruction aura pour conséquence que 128 registres 3 seront lus, 128 registres 19 seront lus, 128 registres 8 seront lus, 128 multiplications seront réalisées sur 2 fois 128 valeurs différentes, 128 additions seront réalisées sur 2 fois 128 valeurs différentes et 128 résultats différents seront écrits dans 128 registres 23.

L'efficacité d'un SIMD vient de ce haut niveau de parallélisme.

En général, sur un SIMD, chaque PE a la possibilité de lire, c'est-à-dire d'aller chercher les opérandes d'une instruction, non seulement dans l'ensemble des mémoires et/ou registres qui lui appartiennent mais également dans tout ou partie de l'ensemble des mémoires et/ou registres qui appartiennent à l'un de ses voisins, voir par example GB 2 417 105. Une variante qui peut être un complément ou une alternative est que chaque PE ait la possibilité d'écrire le résultat d'une instruction, non seulement dans des mémoires et/ou registres qui lui appartiennent mais également dans des mémoires et/ou registres qui appartiennent à l'un de ses voisins.

La notion de voisinage entre PEs est définie par l'architecture du SIMD et plus précisément par la topologie d'interconnexion entre PEs. Plusieurs topologies d'interconnexion entre PEs ont été proposées. Les plus complexes sont de véritables réseaux d'interconnexion entre PEs. La plus simple est une colonne verticale de PEs. Une autre topologie simple est une grille bidimensionnelle de PEs. On peut aussi imaginer des grilles multidimensionnelles de PEs. En général, dans ces 3 derniers cas, les extrémités sont « recollées ». Ainsi, dans la topologie mono dimensionnelle, la colonne verticale de PEs devient un cercle de PEs (on dit souvent un anneau de PEs). Grâce à ce recollage, le voisin Sud du PE le plus au Sud est le PE le plus au Nord et le voisin Nord du PE le plus au Nord est le PE le plus au Sud. De même, dans la topologie bidimensionnelle, la grille de PEs devient un tore. Enfin, dans la topologie multidimensionnelle, la grille multidimensionnelle devient un tore multidimensionnel.

Dans le cas d'une topologie mono dimensionnelle (colonne verticale ou anneau de PEs), chaque PE dispose de 2 voisins que nous appellerons N et S (pour Nord et Sud). Dans le cas d'une topologie bidimensionnelle (grille bidimensionnelle ou tore de PEs), chaque PE dispose de 4 voisins que nous appellerons N, S, E, W (pour Nord, Sud, Est, Ouest). Dans le cas d'une topologie multidimensionnelle (grille multidimensionnelle ou tore multidimensionnel de PEs), chaque PE dispose de $2^n$ voisins, si n est la dimension de l'espace.

Dans la suite de ce document, nous considérerons d'abord le cas des topologies mono dimensionnelles, puis le cas des topologies bidimensionnelles, puis le cas des topologies multidimensionnelles.

Une instruction typique sur un SIMD moderne demande à tous les PEs (ou à certains d'entre eux) d'effectuer une opération la même pour tous, portant sur plusieurs opérandes et de stocker le résultat en un ou plusieurs emplacements. Pour reprendre l'exemple précédent, l'instruction R(23) = R(8) + R(3) * R(19) demande à tous les PEs d'effectuer une opération portant sur 3 opérandes et de stocker le résultat en un emplacement.

Dans la plupart des SIMD, l'instruction définit pour chaque opérande et pour chaque résultat, l'adresse où les différents PEs vont lire l'opérande (ou stocker le résultat). En conséquence, pour un opérande donné, comme pour un emplacement de résultat donné, l'adresse est nécessairement la même pour tous les PEs.

Une telle approche pose problème, notamment sur des applications typiques des SIMD comme le traitement d'images, la compression d'images, la génération synthétique d'images, le traitement du signal ou certaines techniques de résolution d'équations aux dérivées partielles. Par exemple, lorsque ces applications utilisent des algorithmes dans lesquels un pixel est calculé à partir de ses voisins, et cela que la topologie des PEs soit mono, bi, tri ou multidimensionnelle.

Pour illustrer cette difficulté, prenons un exemple mettant en oeuvre du traitement d'images et analysons-le en considérant un SIMD de 16 PEs organisé en anneau.

Dans toute la suite de ce document et afin de simplifier les formules mathématiques les processeurs sont numérotés à partir de 0 ; de même pour les lignes et les colonnes d'une structure de données (signal, image ou volume).

Une manière classique de ranger les pixels de l'image dans les mémoires des différents PEs est d'utiliser le PEO (PE n° 0) pour stocker et traiter la ligne 0 de l'image, le PE1 (PE n° 1) pour stocker et traiter la ligne 1 et ainsi de suite jusqu'au PE15 (PE n° 15) pour stocker et traiter la ligne 15. Comme une image comporte en général plus de 16 lignes, l'utilisateur utilisera le PE0 pour stocker et traiter les lignes 0, 16, 32, 48, 64, 80, ... de l'image, le PE1 pour stocker et traiter les lignes 1, 17, 33, 49, 65, 81, ...de l'image et ainsi de suite jusqu'au PE15 pour stocker et traiter les lignes 15, 31, 47, 63, 79, 95, ...de l'image.

Dans ce rangement, si Np désigne le nombre de PEs et si Lx désigne la largeur de l'image à traiter, un pixel de coordonnées (x, y) est rangé dans le processeur p à l'adresse Ad selon les formules suivantes :

$$p = y \bmod Np$$

Ad = x + Lx * Int(y / Np), (Int(z) désignant la partie entière de z).

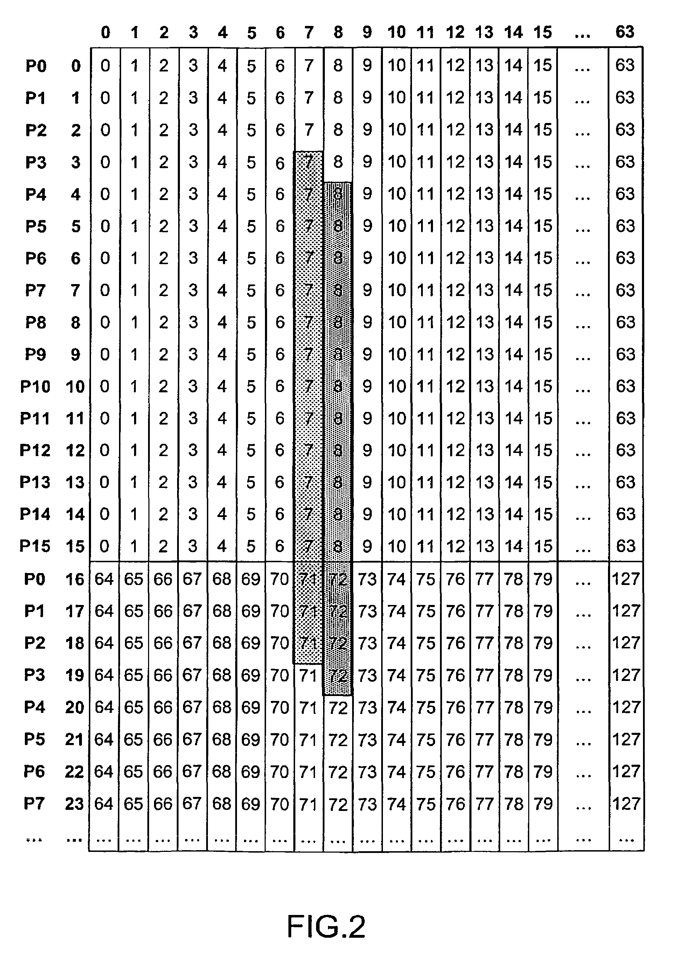

Ce rangement est représenté figure 2. Cette figure considère le cas d'une image de largeur 64 pixels et montre une manière usuelle de la ranger sur un SIMD de 16 PEs organisé en topologie anneau. Dans cette figure, les colonnes représentent les colonnes de l'image, les lignes représentent les lignes de l'image, le numéro du PE est indiqué à l'extrême gauche de chaque ligne et l'adresse où est rangé chaque pixel est indiquée à l'intérieur de chaque case. Dans cette figure, comme dans les 2 suivantes, les frontières entre zones d'adresses homogènes (zone ayant la même adresse sur tous les PEs) sont matérialisées par des traits noirs.

Par convention, on a choisi une représentation visuelle dans laquelle la gauche d'une image est constituée des pixels d'abscisse faible tandis que le haut d'une image est constitué des pixels d'ordonnée faible. Ainsi, le coin supérieur gauche d'un carré dont les bords sont parallèles aux axes de coordonnées est le point d'abscisse la plus faible et d'ordonnée la plus faible tandis le coin inférieur droit est le point d'abscisse la plus forte et d'ordonnée la plus forte. Cette convention est conservée dans la suite.

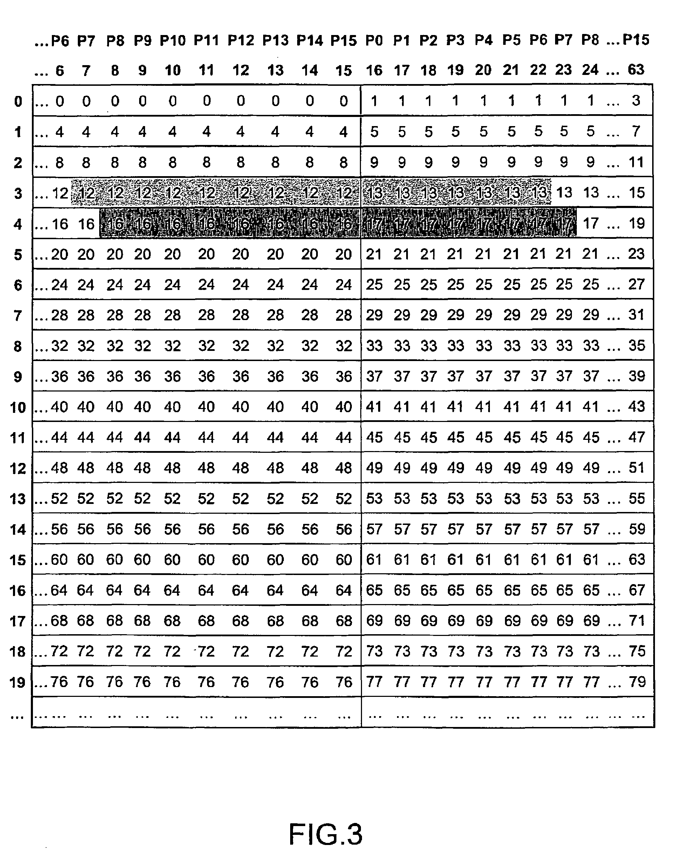

Ce rangement revient à considérer le SIMD comme un anneau vertical de PEs. On pourrait évidemment faire le choix inverse consistant à considérer le SIMD non pas comme un anneau vertical de PEs mais comme un anneau horizontal et utiliser les PEs pour stocker non plus les lignes mais les colonnes de l'image. La figure 3 illustre ce rangement. En réalité, il ne s'agit que d'un choix de représentation visuelle pour le programmeur qui ne change quasiment rien au niveau de la machine. Ce qui est exposé ci-après concernant une représentation en lignes se généralise bien évidemment à une représentation en colonnes.

Le type d'allocation des lignes de l'image aux PEs décrit ci-dessus ne pose aucun problème lorsqu'il s'agit d'opérations simples telles que l'addition de 2 images, la multiplication de 2 images, la multiplication d'une image par une constante, la convolution d'une image par un masque ligne, .... En fait, lorsqu'il s'agit d'opérations dans lesquelles les pixels servant d'opérandes et le pixel résultat sont stockés par le même PE.

Les choses deviennent plus compliquées lorsqu'il s'agit d'opérations dans lesquelles les pixels servant d'opérandes et le pixel résultat sont stockés par des PEs différents. Par exemple, dans le cas de la convolution d'une image par un masque à 2 dimensions, le PE qui est en charge de stocker le pixel résultat doit aller chercher les opérandes dont il a besoin pour effectuer ses calculs non seulement dans des mémoires et/ou registres qui lui appartiennent mais aussi dans des mémoires et/ou registres qui appartiennent aux PEs voisins, voire aux voisins des voisins, voire encore plus loin.

Supposons que l'on veuille effectuer une convolution 3x3 sur un carré 32x32 dont le coin supérieur gauche a pour coordonnées x=8, y=4 et dont le coin inférieur droit a pour coordonnées x=39, y=35 et stocker le résultat sur un carré 32x32 dont le coin supérieur gauche a pour coordonnées x=8, y=68 et dont le coin inférieur droit a pour coordonnées x=39, y=99. On rappelle comme indiqué plus haut que dans le repère xy considéré, l'axe des x est croissant de gauche à droite, l'axe des y de haut en bas.

Soient a(-1, -1), a(0, -1), a(1, -1), a(-1, 0), a(0, 0), a(1, 0), a(-1, 1), a(0, 1), a(1, 1), les 9 coefficients du filtre de convolution.

Soient I(x,y) les pixels de l'image d'origine.

Soient R(x,y+64) les pixels de l'image résultat.

Le calcul à effectuer, pour chaque valeur de x comprise entre 8 et 39 et pour chaque valeur de y comprise entre 4 et 35 est le suivant :

$$
\begin{aligned}
R(x,y+64) = \quad & a(-1, -1) * I(x-1, y-1) + a(0, -1) * I(x, y-1) + a(1, -1) * I(x+1, y-1) \\
& + a(-1, 0) * I(x-1, y) \quad + a(0, 0) * I(x, y) \quad + a(1, 0) * I(x+1, y) \\
& + a(-1, 1) * I(x-1, y+1) + a(0, 1) * I(x, y+1) \; + a(1, 1) \;) * I(x+1, y+1).
\end{aligned}
$$

La 1ère opération est d'effectuer cette convolution sur un segment vertical 16x1 dont l'extrémité supérieure a pour coordonnées x=8, y=4 et dont l'extrémité inférieure a pour coordonnées x=8, y=19. Ce segment apparaît en gris foncé sur la figure 2. La 1ère étape de cette 1ère opération est de lire un segment vertical 16x1 dont l'extrémité supérieure a pour coordonnées x=7, y=3 et dont l'extrémité inférieure a pour coordonnées x=7, y=18. Ce segment apparaît en gris clair sur la figure 2. Chacun des 16 pixels lus est multiplié par le 1er coefficient du masque de convolution. L'étape suivante est de lire un segment vertical 16x1 dont l'extrémité supérieure a pour coordonnées x=8, y=3 et dont l'extrémité inférieure a pour coordonnées x=8, y=18. Chacun des 16 pixels lus est multiplié par le 2ème coefficient du masque de convolution et le résultat de cette 2ème multiplication est ajouté au résultat de la 1ère multiplication. Et ainsi de suite pour les 9 coefficients du masque de convolution. (9 coefficients car nous avons pris l'exemple d'une convolution 3x3). Le résultat est alors stocké sur un segment vertical 16x1 dont l'extrémité supérieure a pour coordonnées x=8, y=68 et dont l'extrémité inférieure a pour coordonnées x=8, y=83. La 1ère opération est alors achevée. Il y a ensuite 31 opérations similaires pour traiter les 31 colonnes restantes de la moitié supérieure du carré à traiter puis 32 opérations similaires pour traiter les 32 colonnes de la moitié inférieure de ce carré.

La difficulté apparaît dès la 1ère étape de la 1ère opération. Elle est ensuite la même pour toutes les étapes de toutes les opérations. Pour cette 1ère étape, il faut lire un segment vertical 16x1 dont l'extrémité supérieure a pour coordonnées x=7, y=3 et dont l'extrémité inférieure a pour coordonnées x=7, y=18. Comme le montre la figure, les pixels à lire pour les PEs 3 à 15 sont rangés à l'adresse 7 tandis que les pixels à lire pour les PEs 0 à 2 sont rangés à l'adresse 71.

Or, sur un SIMD conventionnel le séquenceur envoie la même adresse à tous les PEs.

On peut objecter que l'exemple choisi concerne un rectangle dont les bords ne sont pas alignés sur les frontières entre zones d'adresses homogènes, c'est-à-dire un rectangle dont le bord supérieur a une ordonnée qui n'est pas un multiple du nombre de PEs. Cette objection ne résiste pas à l'analyse. D'une part, le cas de devoir traiter de tels rectangles est un cas fréquent en traitement d'images. D'autre part, même si le rectangle contenant l'image résultat avait des bords alignés sur les frontières entre zones d'adresses homogènes, il faudrait néanmoins, pour traiter les différentes étapes d'une convolution 3x3 aller chercher comme opérandes des segments verticaux 16x1 dont les extrémités ne seraient pas toutes alignées sur les frontières entre zones d'adresses homogènes.

Plusieurs techniques ont été proposées pour contourner cette difficulté.

Une 1ère technique est un chargement en 2 temps avec une activation conditionnelle des PEs. Dans un 1er temps, seuls les PEs devant lire à l'adresse 7 réalisent effectivement l'opération de lecture. Dans un 2ème temps, seuls les PEs devant lire à l'adresse 71 réalisent effectivement l'opération de lecture. C'est donc le programmeur de l'application qui doit gérer le fait que, pour réaliser cette 1ère étape, certains PEs doivent charger comme opérande un pixel qu'ils ont rangé à l'adresse 7 tandis que d'autres PEs doivent charger comme opérande un pixel qu'ils ont rangé à l'adresse 71. D'où une difficulté importante pour programmer ce type de machine. Mais aussi une moindre efficacité d'exécution due au surplus d'instructions à exécuter.

Une 2ème technique est la mise en place d'un registre d'indirection au sein de chaque PE. Un registre d'indirection est un registre qui permet d'accéder à un mot dont l'adresse est contenue dans ce registre. Grâce à ce registre d'indirection, chaque PE peut calculer une adresse qui lui est propre, la charger dans le registre d'indirection et s'en servir pour accéder à sa propre mémoire. Mais, comme pour la 1 ère technique, on retrouve d'une part une difficulté supplémentaire de programmation puisque c'est le programmeur d'application qui doit gérer la difficulté et d'autre part une moindre efficacité d'exécution due au surplus d'instructions à exécuter.

D'autres techniques ont été imaginées. Toutes ont en commun le fait qu'elles conduisent d'une part à une difficulté supplémentaire de programmation et d'autre part à une moindre efficacité d'exécution due au surplus d'instructions à exécuter.

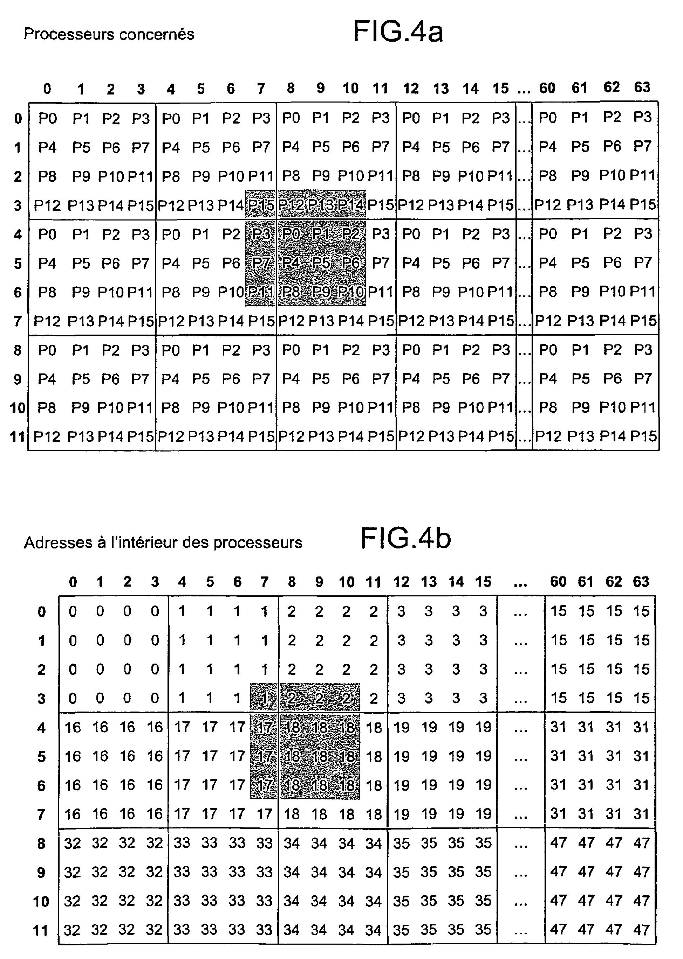

La difficulté est encore plus grande si l'on utilise un SIMD organisé selon une topologie bidimensionnelle. Les figures 4 reprennent le même exemple d'une image de largeur 64 pixels mais utilise un SIMD de 16 PEs organisé en topologie tore 4x4. Pour la 1 ère étape de la 1 ère opération, il faut lire un carré 4x4 dont le coin supérieur gauche a pour coordonnées x=7, y=3 et dont le coin inférieur droit a pour coordonnées x=10, y=6. Ce carré apparaît en gris clair sur la figure 4a. Comme le montre la figure 4b, les pixels à lire sont rangés non plus à 2 adresses différentes comme précédemment mais à 4 adresses différentes : adresse 1 pour le PE15, adresse 2 pour les PE 12, 13, 14, adresse 17 pour les PE 3, 7, 11, adresse 18 pour les autres PEs.

La difficulté croit encore si l'on utilise un SIMD organisé selon une topologie multidimensionnelle. Par exemple, les pixels à lire sont rangés à 8 adresses différentes en topologie tridimensionnelle et à 16 adresses différentes en topologie quadri dimensionnelle. Sauf cas particuliers (position particulière de la zone à lire ou écrire) où le nombre d'adresses différentes est inférieur.

Le but de l'invention est de pallier ces inconvénients.

L'invention est définie dans les revendications annexées.

L'invention est basée sur le fait que l'instruction, au lieu de définir l'ensemble des lectures et/ou l'ensemble des écritures des processeurs élémentaires en indiquant l'adresse à laquelle chaque processeur élémentaire lit ou écrit dans sa propre mémoire, définit l'ensemble des lectures et/ou l'ensemble des écritures des processeurs élémentaires chacun dans sa propre mémoire comme étant une lecture et/ou une écriture sur un champ d'action.

Vu de l'utilisateur, l'ensemble des mots-mémoire de l'ensemble des processeurs élémentaires est vu comme une structure de données unique de type tableau de dimension N, ce tableau pouvant représenter un signal (dimension 1) ou une image (dimension 2) ou un volume (dimension 3) ou ... Le champ d'action est défini par l'instruction, par référence à cette structure de données et comme étant un sous-ensemble de cette structure de données.

Par champ d'action nous entendons un ensemble de mots-mémoire à raison d'un mot-mémoire par processeur élémentaire, ce mot-mémoire étant situé dans la mémoire du processeur élémentaire, un champ d'action d'un opérande étant l'ensemble des mots-mémoires lus par les processeurs élémentaires chacun dans sa propre mémoire pour acquérir cet opérande, un champ d'action d'un résultat étant l'ensemble des mots-mémoires écrits par les processeurs élémentaires chacun dans sa propre mémoire pour stocker ce résultat.

L'instruction comprend pour chaque opérande et/ou chaque résultat, des informations relatives à la position de ce champ d'action, cette position étant définie comme étant une position au sein d'une structure de données unique de type tableau de dimension N (signal ou image ou volume ou ...), réparti sur les mémoires des différents processeurs élémentaires, N étant un entier égal ou supérieur à 1. Dans la suite, on désigne par structure de données, cette structure de données unique de type tableau de dimension N.

La position du champ d'action permet de calculer l'adresse à laquelle chaque processeur élémentaire doit lire dans sa propre mémoire le mot mémoire qui le concerne dans l'opérande et/ou écrire dans sa propre mémoire le mot mémoire qui le concerne dans le résultat.

Une instruction typique sur un SIMD moderne demande à tous les PEs ou à certains d'entre eux d'effectuer une opération la même pour tous, portant sur plusieurs opérandes et de stocker le résultat en un ou plusieurs emplacements.

En reprenant l'exemple de la figure 2, la 1$^{ère}$ étape de la 1$^{ère}$ opération nécessite de lire un segment vertical 16x1 dont l'extrémité supérieure a pour coordonnées x = 7, y = 3 et dont l'extrémité inférieure a pour coordonnées x = 7, y = 18. Le champ d'action de l'opérande I(x-1, y-1) est composé des pixels de coordonnées (x = 7, y = 3), (x = 7, y = 4), (x = 7, y = 5), ..., (x = 7, y = 18) ; comme le montre la figure, les pixels à lire pour les PEs 3 à 15 sont rangés à l'adresse 7 tandis que les pixels à lire pour les PEs 0 à 2 sont rangés à l'adresse 71.

Or, dans un calculateur SIMD conventionnel, l'instruction définit pour chaque opérande et pour chaque résultat, l'adresse où les différents PEs vont lire l'opérande ou stocker le résultat. En conséquence, un SIMD conventionnel ne sait prendre en compte que des champs d'action correspondant à des zones d'adressage homogène. Par exemple, dans un SIMD conventionnel, il est possible de prendre en compte un champ d'action dont l'extrémité supérieure a pour coordonnées x = 7, y = 0 et dont l'extrémité inférieure a pour coordonnées x = 7, y = 15, car tous ces pixels sont rangés à l'adresse 7, ou un champ d'action dont l'extrémité supérieure a pour coordonnées x = 7, y = 16 et dont l'extrémité inférieure a pour coordonnées x = 7, y = 31 car tous ces pixels sont rangés à l'adresse 71, mais pas un champ d'action dont l'extrémité supérieure a pour coordonnées x = 7, y = 3 et dont l'extrémité inférieure a pour coordonnées x = 7, y = 18 car certains pixels sont rangés à l'adresse 7 et d'autres à l'adresse 71. Dit autrement dans un SIMD conventionnel il n'est pas possible de prendre en compte un champ d'action lorsque celui-ci chevauche des zones d'adresses inhomogènes.

Un processeur parallèle conçu selon l'invention permet aux différents opérandes ou résultats d'une instruction de prendre en compte des champs d'action qui ne correspondent pas nécessairement à des zones d'adresses homogènes.

Plus précisément l'invention a pour objet un processeur parallèle qui comprend des processeurs élémentaires PE comprenant chacun au moins une unité de calcul et au moins une mémoire qui comporte des mots-mémoire, et disposés selon une topologie, avec une position déterminée au sein de cette topologie et aptes à exécuter simultanément une même instruction sur des données différentes, l'instruction comportant la lecture d'au moins un opérande et/ou comportant l'écriture d'au moins un résultat. Il est principalement caractérisé en ce que l'instruction définit l'ensemble des lectures et/ou l'ensemble des écritures des processeurs élémentaires chacun dans sa propre mémoire comme étant une lecture et/ou une écriture sur un champ d'action, un champ d'action étant un ensemble de mots-mémoire à raison d'un mot-mémoire par processeur élémentaire, ce mot-mémoire étant situé dans la mémoire du processeur élémentaire, un champ d'action d'un opérande étant l'ensemble des mots-mémoires lus par les processeurs élémentaires chacun dans sa propre mémoire pour acquérir cet opérande, un champ d'action d'un résultat étant l'ensemble des mots-mémoires écrits par les processeurs élémentaires chacun dans sa propre mémoire pour stocker ce résultat, en ce que l'instruction comprend pour chaque opérande et/ou chaque résultat, des informations relatives à la position de ce champ d'action, en ce que la position du champ d'action est définie comme étant une position au sein d'une structure de données unique de type tableau de dimension N, N étant un entier égal ou supérieur à 1, en ce que ce tableau est réparti sur les mémoires des différents processeurs élémentaires.

Le processeur parallèle proposé met en oeuvre le principe suivant : pour chaque opérande et pour chaque élément de la structure de données où stocker le résultat, l'instruction définit non pas l'adresse à laquelle le PE doit lire l'opérande ou écrire le résultat, mais des informations permettant de définir la position du champ d'action de l'opérande ou du résultat au sein de la structure de données. Grâce à ces informations et à une valeur liée à la position de chaque PE, des moyens de calcul permettent à chaque PE de connaître l'adresse à laquelle il doit lire l'opérande ou écrire le résultat.

De cette façon, l'adresse à laquelle chaque PE lit ou écrit directement dans sa propre mémoire est obtenue par un calcul et ce calcul est effectué en fonction de la position du champ d'action et de la position du PE au sein de la topologie.

La forme de ces champs d'action (segment horizontal ou vertical, carré, rectangle ou parallélépipède) reste la même que sur un SIMD conventionnel car calquée sur la topologie des PEs.

En revanche, la position du champ d'action est définie de manière beaucoup plus flexible que sur un SIMD conventionnel. En particulier, un tel processeur parallèle permet de prendre en compte des champs d'action tels que ceux évoqués dans l'exemple du traitement d'image et illustré par les figures 2, 3 et 4 ; et cela bien que les cellules qui composent ces champs d'action se situent à des adresses différentes selon les PEs.

Mais son intérêt va bien au-delà. A titre d'exemple, toutes les applications qui utilisent des algorithmes dans lesquels un pixel est calculé à partir de ses voisins peuvent en bénéficier. Cela englobe le traitement du signal, le traitement d'images, la compression d'images, la génération synthétique d'images et même certaines techniques de résolution d'équations aux dérivées partielles. Un exemple typique est la résolution d'équations aux dérivées partielles dans un espace à 3 dimensions par la méthode des différences finies.

Pour ces applications, le bénéfice est double :

- la programmation d'un algorithme est simplifiée car le programmeur n'a plus à se préoccuper de la notion de frontières entre zones d'adresses homogènes,
- l'exécution est accélérée car il y a moins d'instructions à exécuter.

Selon une caractéristique de l'invention, le processeur parallèle comprend des moyens de calcul de la position du champ d'action en fonction desdites informations, reliés aux moyens de calcul de l'adresse.

Les moyens de calcul de l'adresse au sein de chaque processeur élémentaire en fonction de la position du champ d'action peuvent être

soit entièrement localisés au niveau de chaque processeur élémentaire,

soit partiellement localisés au niveau de chaque processeur élémentaire et partiellement regroupés entre plusieurs processeurs élémentaires.

Le processeur parallèle selon l'invention comprend éventuellement des moyens de calcul de la position du champ d'action en fonction desdites informations. Ces moyens de calcul de la position du champ d'action peuvent être

- soit entièrement regroupés entre tous les PE,
- soit entièrement localisés au niveau de chaque processeur élémentaire,
- soit partiellement regroupés entre plusieurs PE et partiellement localisés au niveau d'autres processeurs élémentaires.

De manière générale, les processeurs élémentaires sont disposés selon une topologie à P dimensions, P étant un entier supérieur ou égal à 1 et/ou les données à traiter appartiennent à une structure dans un espace à N dimensions, N étant un entier supérieur ou égal à 1.

Selon une caractéristique de l'invention, pour chaque dimension le calcul de l'adresse de l'élément de la structure de données qui concerne un processeur élémentaire d'abscisse p selon ladite dimension, est obtenu par combinaison d'une valeur liée à la position du champ et d'une valeur liée à la position du processeur élémentaire.

Selon un mode de réalisation de l'invention, le champ d'action présentant des extrémités définies par ses coordonnées, la position du champ d'action est par exemple définie par la position de l'extrémité dont les coordonnées sont minimales.

Selon une caractéristique de l'invention, pour chaque dimension les moyens de calcul de l'adresse de l'élément de la structure de données qui concerne un processeur élémentaire d'abscisse p selon ladite dimension en fonction de la position du champ d'action comprennent des moyens de calcul de :

$$Ad = Int((Wmin + Np - 1 - p) / Np),$$

Np étant le nombre de processeurs élémentaires considéré sur ladite dimension, Wmin étant défini sur ladite dimension en fonction des coordonnées de ladite position.

Le processeur parallèle est par exemple de type SIMD.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un exemple de calculateur SIMD selon l'état de la technique,
la figure 2 déjà décrite illustre un rangement des 64 x 64 pixels d'une image dans un calculateur SIMD de 16 PEs organisé en anneau,
la figure 3 déjà décrite illustre un autre rangement des 64 x 64 pixels d'une image dans un calculateur SIMD de 16 PEs organisé en anneau,
les figures 4 déjà décrites illustrent un rangement des 64 x 64 pixels d'une image dans un calculateur SIMD de 16 PEs organisé en tore 4 x 4, la figure 4a représentant les PEs concernés, la figure 4b, les adresses à l'intérieur des PEs,
la figure 5 représente schématiquement un exemple de processeur parallèle selon l'invention,
les figures 6 représentent schématiquement des exemples de réalisation hardware des moyens de calcul d'adresse selon l'invention dans les cas suivants :

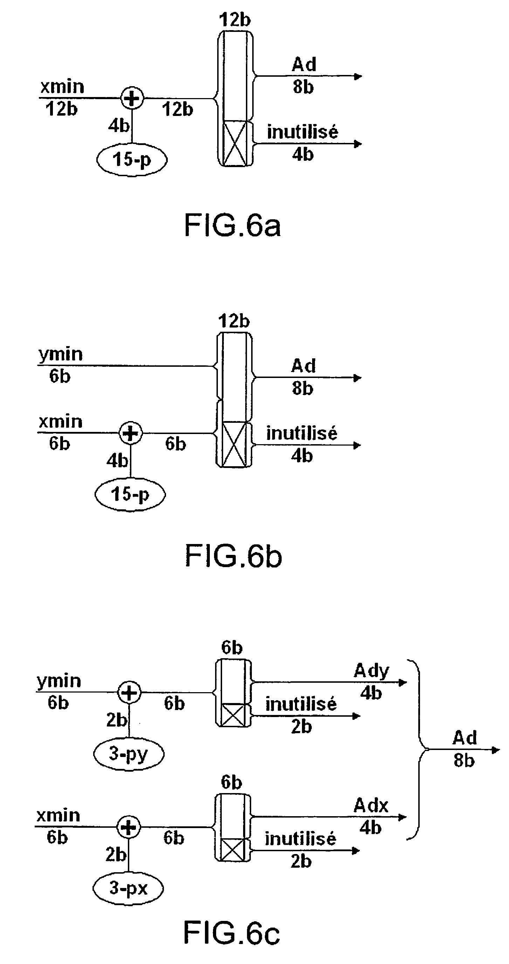

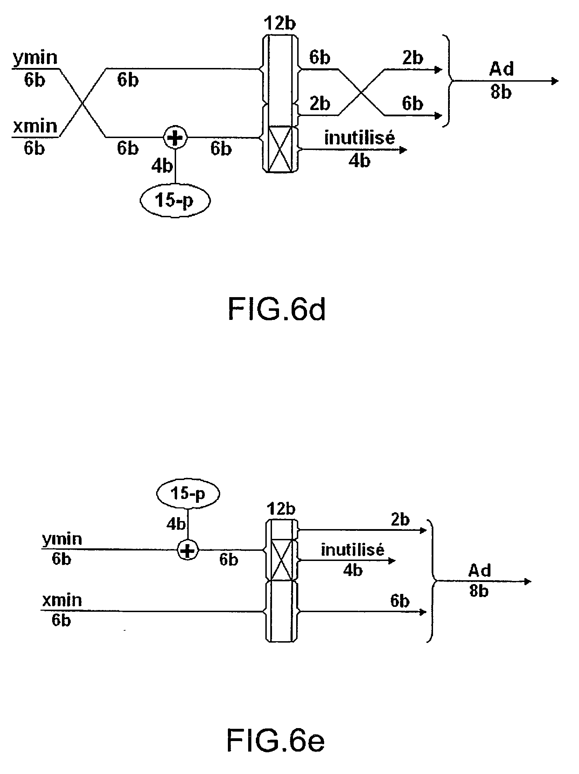

- processeur parallèle mono dimensionnel et structure de données mono dimensionnelle (figure 6a),
- processeur parallèle mono dimensionnel et structure de données bidimensionnelle (figure 6b),
- processeur parallèle mono dimensionnel et structure de données multidimensionnelle (figure 6c),
- processeur parallèle bidimensionnel et structure de données bidimensionnelle (figure 6d et 6e).

D'une figure à l'autre, les mêmes éléments sont repérés par les mêmes références.

Selon l'invention, l'instruction définit non pas l'adresse à laquelle chaque PE doit lire un opérande ou écrire un résultat mais des informations sur la position du champ d'action au sein de la structure de données traitée. Cette position peut être définie soit en valeur absolue, soit en valeur relative par rapport à une position précédente. Un certain nombre d'étapes de calculs sont donc nécessaires pour en déduire une adresse propre à chaque PE.

Une 1 ère étape consiste à calculer la position du champ d'action à partir de l'instruction en cours d'exécution si celle-ci n'est pas définie en valeur absolue par l'instruction. A l'issue de cette 1 ère étape, le résultat est indépendant du PE.

Une 2ème étape consiste à calculer l'adresse à laquelle chaque PE doit lire un opérande ou écrire un résultat à partir de la position du champ d'action. Comme on le verra dans les exemples plus loin, l'adresse est obtenue par addition ou soustraction d'une valeur liée à la position du champ et d'une valeur liée à la position du PE. A l'issue de cette 2ème étape, le résultat dépend du PE.

Selon ce que l'on cherche à optimiser (par exemple : plutôt le nombre de fils ou plutôt le nombre de portes), ces calculs peuvent être soit réalisés au maximum en central donc une fois pour toutes et partagés entre plusieurs PEs, soit au contraire réalisés au maximum en local au niveau de chaque PE ou toute solution intermédiaire de regroupement de certains calculs communs. Les variantes étant très nombreuses, il n'est pas possible de les décrire toutes et on se limitera à quelques exemples.

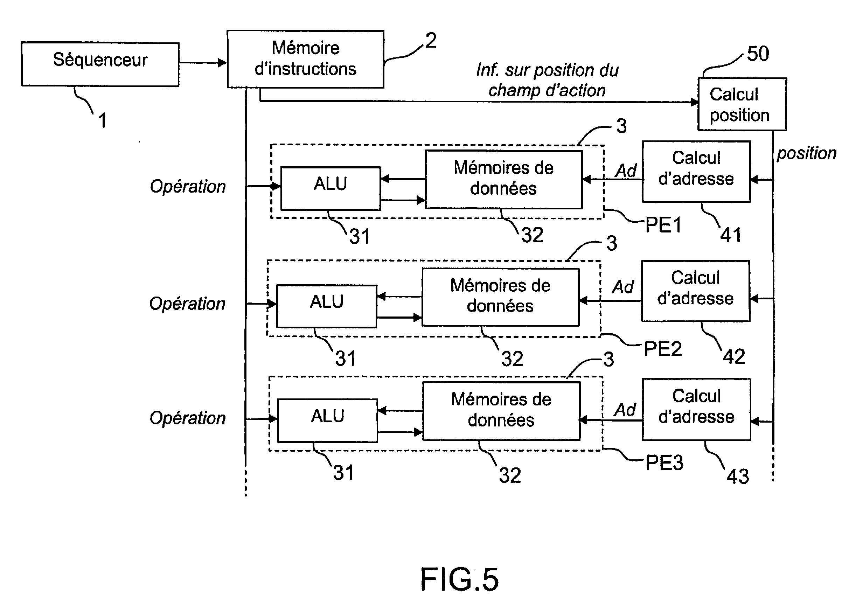

Ainsi, une implémentation illustrée figure 5 peut consister à calculer la position du champ d'action en central par les moyens de calcul 50 tandis que chaque PE utilise cette information pour en déduire une adresse Ad dans son ensemble de mémoires et/ou de registres ; cette adresse est obtenue par les moyens de calcul d'adresse 41, 42, 43 de chaque PE. L'avantage de ce principe est de minimiser le volume de calculs à réaliser dans chaque PE et donc le volume de hardware.

Si l'on pousse la délocalisation à l'extrême, une autre implémentation peut consister à tout calculer au niveau de chaque PE: la position du champ d'action et l'adresse correspondante. L'inconvénient de cette variante est d'augmenter le volume de calculs à réaliser dans chaque PE et donc le volume de hardware. Toutefois, elle peut permettre de réduire le volume d'informations à transmettre à tous les PEs et donc le nombre de fils sur le circuit, ce qui peut être intéressant dans certains cas.

A l'opposé, on peut souhaiter réduire au minimum le volume de calculs à réaliser dans chaque PE et donc le volume de hardware. Une autre implémentation peut alors consister à mutualiser certains calculs communs à plusieurs PEs au niveau d'un groupe de PEs, voire en central. Nous en verrons un exemple dans le 4ème exemple de réalisation.

La réalisation des moyens de calcul d'adresse 41, 42, 43 de chaque PE peut être faite au moyen d'un hardware câblé ou d'un hardware plus flexible, par exemple un processeur programmable. Les calculs peuvent être également réalisés en pur logiciel par les ALU des PEs, donc sans ajout de hardware supplémentaire, pourvu que chaque PE dispose d'un registre d'indirection. Une telle mise en oeuvre, encore plus économique en hardware, peut donc être intéressante dans certaines applications.

Différents choix sont possibles quant aux informations définissant la position du champ d'action. Par exemple le centre du champ ou une extrémité dans une direction définie à l'avance. Comme tous ces choix sont équivalents à une translation près et que le passage de l'un à l'autre est trivial, nous ne nous étendrons donc pas plus sur ce point. En fait, ces choix ont en commun le fait que la position du champ d'action est définie par la position d'un barycentre obtenu par combinaison linéaire des extrémités, la somme des poids des extrémités étant égale à 1. On a choisi pour décrire les exemples de réalisation le cas où l'information choisie pour définir la position d'un champ d'action est le point du champ dont toutes les coordonnées sont minimales. Autrement dit, l'extrémité du champ dans la direction du point à l'infini valant $-\infty$ sur chaque coordonnée. Soit, sur les figures 2, 3 et 4, le point de coordonnées (7, 3) pour la 1ère étape de la 1ère opération.

L'invention peut être appliquée à des processeurs parallèles organisés en topologies mono, bi, tri ou multidimensionnelles et, dans chacune de ces topologies, sur des structures de données mono dimensionnelles (ex : signal), bidimensionnelles (ex : image), tridimensionnelles (ex : volume 3D pour la résolution d'équations aux dérivées partielles) ou multidimensionnelles, mais aussi pour différents modes de rangement de chaque structure de données sur chaque type de processeur parallèle.

L'invention peut aussi être appliquée à des architectures de traitement faisant intervenir un grand nombre de processeurs élémentaires exécutant le même traitement sur des données différentes, y compris si cette architecture n'entre pas dans la catégorie des SIMD. Par exemple, si la structure de contrôle n'est pas un séquenceur ou n'est pas programmable ou si la programmation se fait à un niveau plus élevé qu'une instruction.

On va à présent détailler quelques exemples de réalisation.

Le 1 er exemple de réalisation concerne le cas d'un processeur parallèle mono dimensionnel par exemple un anneau et d'une structure de données mono dimensionnelle par exemple un signal.

On considère le cas où l'utilisateur a rangé ses données sur les processeurs parallèles de la manière suivante : l'élément x du signal est rangé dans le PE n° p à l'adresse Ad avec :

$$p = x \bmod Np$$

$$Ad = Int(x / Np)$$

Np étant le nombre de PEs.

Dans ce cas, l'ensemble des PEs est vu comme un segment de largeur Np et le champ d'action est un segment de largeur Np : il contient Np éléments.

On considère le cas où l'information utilisée pour définir la position du champ est l'abscisse de l'extrémité gauche du champ, celle dont l'abscisse est minimum. Soit Xmin cette abscisse ; le champ d'action s'étend donc de Xmin à Xmin+Np-1. Chaque PE est concerné par un et un seul de ces éléments.

L'équation permettant de calculer l'adresse de l'élément qui concerne le PE n° p au sein du champ est la suivante :

$$Ad = Int((Xmin + Np - 1 - p) / Np)$$

Cette équation peut donner lieu à de nombreuses mises en oeuvre, allant du pur hardware au pur logiciel.

Mentionnons toutefois une mise en oeuvre hardware particulièrement simple dans le cas où Np est une puissance de 2. Dans ce cas en effet, si LNp désigne le logarithme à base 2 de Np, le mode de calcul de Ad à partir de Xmin est le suivant :

Additionner Xmin et (Np-1-p). On remarque d'ailleurs que, pour chaque PE, (Np-1-p) est une constante égale au complément à 2 de p (que l'on obtient en inversant tous les bits de p) et que cette constante peut être conservée en mémoire dans le PE n° p.

Supprimer les LNp derniers bits du résultat.

Au total, il y a une seule addition par PE.

Cette mise en oeuvre est illustrée figure 6a pour Np=16, LNp=4 et Xmin est sur 12 bits. Elle se caractérise par le fait que l'adresse à laquelle un PE doit lire un opérande ou écrire un résultat est obtenue par addition (ou soustraction) d'une valeur liée à la position du champ et d'une valeur liée à la position du PE.

Ce type de mise en oeuvre particulièrement simple peut être transposé sur tous les exemples de réalisation qui vont être décrits. Plus généralement, il peut être transposé sur tout type de processeur parallèle organisé en topologies mono, bi, tri ou multidimensionnelles et, dans chacune de ces topologies, sur des structures de données mono (ex : signal), bi (ex : image), tri (eux : volume 3D) ou multidimensionnelles. Il suffit en fait de reprendre le calcul en fonction du type de processeur parallèle, de la structure de données et du rangement choisi puis d'adapter la mise en oeuvre en conséquence.

Le 2ème exemple de réalisation concerne le cas d'un processeur parallèle mono dimensionnel par exemple un anneau et d'une structure de données bidimensionnelle, par exemple une image.

On peut reprendre le calcul fait pour une structure de données mono dimensionnelle en le transposant sur une structure de données bidimensionnelle, en déduire des équations et adapter la mise en oeuvre en conséquence.

On peut aussi utiliser un procédé qui permet de traiter une structure de données bidimensionnelle en se ramenant au cas que nous venons d'analyser pour une structure de données mono dimensionnelle.

Soit Np le nombre de PEs, Lx la largeur de l'image à traiter, c'est à dire le nombre de pixels sur chaque ligne et Ly sa hauteur c'est à dire le nombre de pixels sur chaque colonne. Il s'agit plus exactement des bornes supérieures pour les nombres de PEs, de pixels sur chaque ligne et chaque colonne. En effet, dans la plupart des cas et à des fins de simplification du hardware, on préfère plonger l'image à traiter dans une image plus grande et donc choisir des valeurs Lx et Ly supérieures aux dimensions de l'image à traiter. D'une part, si l'on doit traiter plusieurs images de tailles différentes, on peut préférer faire un choix unique permettant de traiter la plus large d'entre elles. D'autre part, pour simplifier la mise en oeuvre lorsque celle-ci est en hardware, on choisit souvent une puissance de 2.

Une manière de revenir à une structure de données mono dimensionnelle (en d'autres termes, une manière de ranger les pixels sur les PEs) est d'écrire, pour chaque pixel (x, y) :

$$w = x + Lx * y$$

Ce type de rangement utilisé figure 3, revient à considérer l'ensemble des PEs comme un bloc horizontal de PEs, chaque PE étant responsable d'une colonne ou de plusieurs colonnes. Il diffère de celui analysé précédemment et représenté par la figure 2 qui revient à considérer l'ensemble des PEs comme un bloc vertical de PEs, chaque PE étant responsable d'une ligne ou de plusieurs lignes. Dans ce cas, il faut écrire, pour chaque pixel (x, y) :

$$w = y + Ly * x$$

En comparant ces 2 formules, on comprend aisément comment passer d'un rangement à l'autre. On indiquera d'ailleurs ultérieurement une manière générale pour passer d'un rangement à un autre. On se limitera donc pour le moment au 1er rangement, utilisé figure 3 et caractérisé par la transformation :

$$w = x + Lx * y$$

Grâce à cette transformation, on peut ranger les pixels sur le processeur parallèle comme on l'a fait pour la 1 ère réalisation : l'élément w du signal est rangé dans le PE n° p à l'adresse Ad avec :

$$p = w \bmod Np$$

$$Ad = Int(w / Np)$$

Dans ce cas, le champ d'action est un segment horizontal de largeur Np.

On considère, à titre d'exemple, le cas où l'information utilisée pour définir la position du champ est la position de l'extrémité du champ dont les coordonnées sont minimales.

Soit Xmin, Ymin les coordonnées de ce point.

Posons :

$$Wmin = Xmin + Lx * Ymin$$

L'équation permettant au PE n° p de calculer l'adresse du pixel qui le concerne au sein du champ est la suivante :

$$Ad = Int((Wmin + Np - 1 - p) / Np)$$

C'est la même équation que dans la 1 ère réalisation. Simplement, Wmin remplace Xmin. On a ainsi un moyen simple de transposer, à une structure de données bidimensionnelle, toute mise en oeuvre utilisable pour une structure de données mono dimensionnelle et notamment celle que nous avons détaillée. Si Np et Lx sont des puissances de 2, il n'y a qu'une seule addition par PE. Désignons par LNp et LLx leurs logarithmes respectifs. Pour simplifier encore la réalisation, plutôt que d'effectuer cette addition sur Wmin, on remarque qu'elle ne porte en réalité que sur Xmin soit sur Lx bits seulement. Les autres opérations sont des concaténations de bits, beaucoup plus simples que des additions. Ainsi simplifié, le mode de calcul de Ad à partir de Xmin, Ymin est le suivant :

Additionner Xmin et (Np-1-p).
Supprimer les LNp derniers bits du résultat.

Concaténer en poids faibles la quantité précédente représentée sur LLx - LNp bits et en poids forts Ymin.

Cette mise en oeuvre est illustrée par la figure 6b pour Np=16, LNp=4, Xmin et Ymin sur 6 bits.

Le 3ème exemple de réalisation est le cas d'un processeur parallèle mono dimensionnel (par exemple un anneau) et d'une structure de données de dimension supérieure à 2.

On considère tout d'abord le cas d'une structure de données tridimensionnelle (par exemple un volume 3D).

Soit Lx la largeur du volume à traiter et Ly sa profondeur et Lz sa hauteur, ou plus exactement, pour les raisons que nous avons vues précédemment, des bornes supérieures de ces 3 quantités.

Une manière de revenir à une structure de données mono dimensionnelle (en d'autres termes, une manière de ranger les pixels sur les PEs) est d'écrire, pour chaque pixel (x, y, z) :

$$w = x + Lx * (y + Ly * z)$$

On considère pour la suite le rangement w = x + Lx * (y + Ly * z).

On peut aisément transposer le raisonnement à d'autres rangements tels que :

$$w = x + Lx * (z + Lz * y))$$

$$w = y + Ly * (x + Lx * z))$$

$$w = y + Ly * (z + Lz * x))$$

$$w = z + Lz * (x + Lx * y))$$

$$w = z + Lz * (y + Ly * x))$$

Grâce à cette transformation, on peut ranger les pixels sur le processeur parallèle comme on l'a fait pour la 1ère réalisation: l'élément w du signal est rangé dans le PE n° p à l'adresse Ad avec :

$$p = w \text{ Mod } Np$$

$$Ad = \text{Int}(w / Np)$$

Dans ce cas, l'ensemble des PEs est vu comme un segment horizontal de largeur Np et le champ d'action est un segment horizontal de largeur Np.

On considère à titre d'exemple, le cas où l'information utilisée pour définir la position du champ est la position de l'extrémité du champ dont les coordonnées sont minimales. Soit Xmin, Ymin, Zmin les coordonnées de ce point.

$$\text{Posons : } Wmin = Xmin + Lx * (Ymin + Ly * Zmin))$$

L'équation permettant au PE n° p de calculer l'adresse du pixel qui le concerne au sein du champ est la suivante :

$$Ad = \text{Int}((Wmin + Np - 1 - p) / Np)$$

C'est la même équation que dans la 1ère réalisation. Simplement, Wmin remplace Xmin. On a ainsi un moyen simple de transposer, à une structure de données tridimensionnelle, toute mise en oeuvre utilisable pour une structure de données mono dimensionnelle et notamment celle que nous avons détaillée. Si Np, Lx et Ly sont des puissances de 2, il n'y a qu'une seule addition par PE. On désigne par LNp, LLx et LLy leurs logarithmes respectifs. Pour simplifier encore la réalisation, plutôt que d'effectuer cette addition sur Wmin, on remarque qu'elle ne porte en réalité que sur Xmin soit sur Lx bits seulement. Les autres opérations sont des concaténations de bits, beaucoup plus simples que des additions. Ainsi simplifié, le mode de calcul de Ad à partir de Xmin, Ymin, Zmin est le suivant :

Additionner Xmin et (Np-1-p).
Supprimer les LNp derniers bits du résultat.

Concaténer en poids faibles la quantité précédente représentée sur Lx - LNp bits, en poids moyens Ymin représenté sur Ly bits et en poids forts Zmin représenté sur Lz bits.

Le même principe peut être appliqué à des structures de données de dimension quelconque. Ainsi, en dimension 4, il suffit :

d'écrire pour chaque pixel (x, y, z, t) :

$$w = x + Lx * (y + Ly * (z + Lz * t)),$$

de définir la position du champ d'action grâce à Xmin, Ymin, Zmin, Tmin,
de poser : Wmin = Xmin + Lx * (Ymin + Ly * (Zmin + Lz * Tmin)), et enfin de calculer pour chaque PE :

$$Ad = \text{Int}((Wmin + Np - 1 - p) / Np.$$

Le 4ème exemple de réalisation est le cas d'un processeur parallèle bidimensionnel par exemple un tore et d'une structure de données bidimensionnelle par exemple une image.

Soit Nx le nombre de PEs sur l'axe des x, Ny le nombre de PEs sur l'axe des y et donc Nx*Ny le nombre total de PEs. Soit Lx la largeur de l'image à traiter et Ly sa hauteur, ou comme nous l'avons vu précédemment, des bornes supérieures de ces 2 quantités. De préférence, on choisit Lx et Ly respectivement parmi les multiples de Nx et de Ny. On désigne par (px, py) le PE de coordonnées (px, py) sur le tore des PEs.

On considère à titre d'exemple, le cas où l'utilisateur a rangé ses données sur le processeur parallèle de la manière suivante : le pixel (x, y) de l'image est rangé dans le PE (px, py) à l'adresse Ad avec :

$$px = x \bmod Nx$$

$$py = y \bmod Ny$$

$$Adx = Int(x / Nx)$$

$$Ady = Int(y / Ny)$$

$$Ad = Adx + (Lx / Nx) * Ady$$

Dans ce cas de rangement utilisé figures 4, l'ensemble des PEs est vu comme un rectangle de largeur Nx et de hauteur Ny et le champ d'action est un rectangle de largeur Nx et de hauteur Ny.

On remarque que ce rangement est calqué sur le rangement utilisé pour une structure de données mono dimensionnelle. En fait, il reproduit ce rangement dans chacune des 2 directions de l'espace. Le dispositif de traitement sera donc exactement le même, mais devra être appliqué dans chacune des 2 directions de l'espace.

On considère toujours à titre d'exemple, le cas où l'information utilisée pour définir la position du champ est le coin du champ dont les coordonnées sont les plus faibles, c'est-à-dire l'extrémité du champ selon la direction du point à l'infini valant -∞ sur chaque coordonnée. Soit Xmin, Ymin les coordonnées de ce point.

Les équations permettant au PE (px, py) de calculer l'adresse de l'élément qui le concerne au sein du champ sont les suivantes :

$$Adx = Int((Xmin + Nx - 1 - px) / Nx)$$

$$Ady = Int((Ymin + Ny - 1 - py) / Ny)$$

$$Ad = Adx + (Lx / Nx) * Ady$$

On retrouve donc 2 fois, une fois sur l'axe des x, une fois sur l'axe des y, l'équation trouvée sur la 1 ère réalisation et caractéristique du dispositif proposé. Comme nous l'avons dit, celle-ci peut donner lieu à de nombreuses mises en oeuvre, allant du pur hardware au pur logiciel.

Mentionnons toutefois, comme nous l'avons fait pour les réalisations précédentes une mise en oeuvre hardware particulièrement simple dans le cas où Nx, Ny, Lx et Ly sont des puissances de 2. Si LNx désigne le logarithme à base 2 de Nx, LNy le logarithme à base 2 de Ny, LLx le logarithme à base 2 de Lx, LLy le logarithme à base 2 de Ly, le mode de calcul de Ad à partir de Xmin, Ymin est le suivant :

Additionner Xmin et (Nx-1-px). On remarque que Xmin, Nx et px sont des valeurs communes à une colonne de PEs. Ce calcul n'est donc à faire qu'une seule fois par colonne de PEs. En outre, la quantité (Nx-1-px) est une constante pour une colonne de PEs. Elle peut être conservée dans une mémoire unique pour une colonne de PEs. Supprimer les LNx derniers bits du résultat → Adx sur LLx-LNx bits.

Additionner Ymin et (Ny-1-py).On remarque que Ymin, Ny et py sont des valeurs communes à une ligne de PEs. Ce calcul n'est donc à faire qu'une seule fois par ligne de PEs. En outre, la quantité (Ny-1-py) est une constante pour une ligne de PEs. Elle peut être conservée dans une mémoire unique pour une ligne de PEs.

Supprimer les LNy derniers bits du résultat → Ady sur LLy-LNy bits.

Ad = Adx + (Lx / Nx) * Ady, ce qui revient à concaténer en poids faible Adx représenté sur LLx-LNx bits et en poids fort Ady représenté sur LLy-LNy bits.

On vérifie bien que le type de mise en oeuvre précédent a pu être transposé. Il y a désormais une seule addition par ligne de PEs et une seule addition par colonne de PEs. En outre, ces additions portent sur très peu de bits. D'où une mise en oeuvre encore bien plus économique que celle nécessaire aux réalisations précédentes. Cette mise en oeuvre est illustrée figure 6c pour Nx=4, Ny=4, LNx=2, LNy=2, Xmin et Ymin sur 6 bits.

On a analysé successivement 4 réalisations choisies à titre d'exemples :

- processeur parallèle mono dimensionnel et structure de données mono dimensionnelle
- processeur parallèle mono dimensionnel et structure de données bidimensionnelle
- processeur parallèle mono dimensionnel et structure de données multidimensionnelle
- processeur parallèle bidimensionnel et structure de données bidimensionnelle.

Toutefois, le principe proposé peut être appliqué à des processeurs parallèles organisés en topologies mono, bi, tri ou multidimensionnelles et, dans chacune de ces topologies, sur des structures de données mono, bi, tri ou multidimensionnelles.

On peut généraliser de la manière suivante. Soit n la dimension de la structure de données et p la dimension de la topologie du processeur parallèle.

Si n=p, on applique le principe dans chacune des p directions, exactement comme nous l'avons vu pour n=2 (4ème réalisation).

Si n>p, comme nous l'avons vu dans le cas de la 2ème et de la 3ème réalisation, on réduit la dimension de la structure, en choisissant 2 axes, (puis 2 autres, puis 2 autres, ..., jusqu'à obtenir une structure de dimension p) et à réduire ces 2 axes à un seul en appliquant une formule du type :

$$w = x + Lx * y.$$

Si n<p, on augmente la dimension de la structure, en choisissant un axe, (puis un autre, puis un autre, ..., jusqu'à obtenir une structure de dimension p) et on découpe cet axe en tranches afin de le dédoubler. Ainsi, pour passer d'une coordonnée x à 2 coordonnées w1 et w2, on choisit une largeur de tranche Lx et on applique une formule du type :

$$w1 = x \text{ Mod } Lx$$

$$w2 = \text{Int} (x / Lx).$$

On a analysé jusqu'à présent des réalisations mettant en oeuvre un mode de rangement dans lequel 2 éléments successifs sur un axe (l'axe des x par exemple) sont conservés et traités par 2 PEs différents. Typiquement, dans le cas mono dimensionnel (1ère réalisation), on a considéré, à titre d'exemple, le cas où l'utilisateur a rangé l'élément x du signal dans le PE n° p à l'adresse Ad avec :

$$p = x \text{ Mod } Np$$

$$Ad = \text{Int}(x / Np).$$

De même, dans le cas bidimensionnel (2ème réalisation), nous avons pris pour exemple, le cas où l'utilisateur a rangé le pixel (x, y) dans le PE n° p à l'adresse Ad avec :

$$w = x + Lx * y$$

$$p = w \bmod Np$$

$$Ad = Int(w / Np).$$

Il ne s'agit que d'exemples. Le procédé peut être appliqué à bien d'autres modes de rangement.

Ainsi, pour rester dans le cas mono dimensionnel, l'utilisateur peut souhaiter définir une taille Lx et ranger l'élément x du signal dans le PE n° p à l'adresse Ad avec :

$$x1 = x \bmod Lx$$

$$x2 = Int(x / Lx)$$

$$p = x2 \bmod Np$$

$$Ad = x1 + Lx * Int(x2 / Np).$$

Il s'agit d'un mode de rangement dans lequel un segment de Lx éléments successifs sur l'axe des x est conservé et traité par le même PE, tandis que le PE suivant conserve et traite le segment suivant.

L'équation permettant au PE n° p de calculer à partir de Xmin, l'adresse de l'élément qui le concerne au sein du champ est la suivante :

$$Xmin1 = Xmin \bmod Lx$$

$$Xmin2 = Int(Xmin / Lx)$$

$$Ad = Xmin1 + Lx * Int((Xmin2 + Np - 1 - p) / Np).$$

Comme on le voit, cela revient à appliquer le procédé sur Xmin2 et à ne pas toucher à Xmin1.

On considère le cas où Lx et Np sont des puissances de 2 pour lequel une mise en oeuvre hardware particulièrement simple est possible. On désigne par LNp et LLx leurs logarithmes respectifs. Les équations ci-dessus peuvent s'interpréter ainsi :

Découper Xmin en 2 parties, les poids faibles sur LLx bits constituant Xmin1, les poids forts constituant Xmin2.
Appliquer à Xmin2 le dispositif proposé dans la 1 ère réalisation. Le résultat est : Int((Xmin2 + Np - 1 - p) / Np).

Concaténer en poids faibles Xmin1 représenté sur Lx bits et en poids forts le résultat du dispositif.

En d'autres termes, dans le cas où Lx et Np sont des puissances de 2, il faut
mettre à part les LLx bits de poids faible de Xmin,
appliquer le dispositif aux autres bits de Xmin,
concaténer en poids faible les LLx bits mis à part avec le résultat du dispositif.

Cette extension est totalement indépendante de l'extension mentionnée au paragraphe précédent ; elle peut lui être couplée. Elle s'applique donc au cas multidimensionnel, tant pour la topologie du processeur parallèle que pour la structure de données. Il suffit de l'appliquer dans chacune des dimensions. En conséquence, le procédé s'applique à tout mode de rangement dans lequel un parallélépipède de taille Lx sur l'axe des x, Ly sur l'axe des y, ... est conservé et traité par le même PE, tandis que les PEs voisins (pour la topologie du processeur parallèle) conservent et traitent les parallélépipèdes voisins (pour la topologie de la structure de données).

On peut généraliser à d'autres rangements. Nous allons le montrer dans le cas multidimensionnel en nous plaçant dans le cas où les tailles de la structure de données (Lx, Ly, Lz, ...) ainsi que le nombre de processeurs (Nx, Ny, Nz, ...) dans chaque direction sont des puissances de 2. Le fait de choisir des puissances de 2 permet d'expliquer les opérations à réaliser sur les représentations binaires, ce qui est plus simple, mais on peut généraliser à des valeurs quelconques de Lx, Ly, Lz, ..., Nx, Ny, Nz, ... en remplaçant les opérations décrites sur les représentations binaires par des formules mathématiques utilisant des multiplications, des divisions, des modulo et des parties entières comme indiqué dans les exemples précédents. Pour ranger la structure de données sur le processeur parallèle puis appliquer le procédé à ce rangement, on peut procéder ainsi :

Concaténer sur un mot unique de LLx + LLy + LLz + ... bits les différentes coordonnées du point utilisé pour définir la position du champ ; cela revient à former ce que nous appelions précédemment w.

Permuter l'ordre des bits de w (Il y a autant de rangements possibles que de permutations possibles) ; soit w' le mot ainsi obtenu.

Découper w' en mots de taille LLx, LLy, LLz, ... bits ; soient wx', wy', wz', ... les mots ainsi obtenus.

Appliquer le procédé dans chacune des dimensions du processeur parallèle, c'est-à-dire :

-    ajouter (Nx - 1 - px) à wx',
-    supprimer les LNx derniers bits du résultat ;on obtient Adx',
-    ajouter (Ny -1 - py) à wy',
-    supprimer les LNy derniers bits du résultat ; on obtient Ady',
-    et ainsi de suite dans chaque direction du processeur parallèle.

Permuter à nouveau l'ordre des bits de Adx', Ady', Adz', ... selon une permutation qui n'est pas nécessairement en rapport avec la précédente permutation. On obtient alors les adresses de rangement Adx, Ady, Adz dans chacune des directions du processeur parallèle.

Concaténer ces adresses sur un mot unique Ad qui représente l'adresse concernée par le champ au sein de chaque PE.

Pour illustrer ceci, on revient sur l'exemple illustré par la figure 2. On rappelle que cet exemple concerne un processeur parallèle mono dimensionnel de 16 PEs organisés en anneau, que la structure de données est une image de taille Lx = 64 et Ly = 64 et que les pixels de l'image sont rangés en ligne. On a donc

Np= 16 → LNp = 4
Lx = 64 → LLx = 6
Ly = 64 → LLy = 6

L'opération pour passer de Xmin, Ymin à Ad est la suivante :

Concaténer Xmin, Ymin sur un mot unique de 6 + 6 = 12 bits. Soit w le mot ainsi obtenu.
Permuter les 6 bits de poids faible et les 6 bits de poids fort de w. Soit w' le mot ainsi obtenu.
Appliquer le procédé dans le cas d'un processeur parallèle mono dimensionnel, c'est-à-dire :

-    Ajouter (16 - 1 - p) à w',
-    Supprimer les 4 derniers bits du résultat. On obtient Ad'.
-    Permuter les 2 bits de poids faible et les 6 bits de poids fort de Ad'. Le mot ainsi obtenu est l'adresse Ad.

Cela rentre donc bien dans le cadre de la généralisation que nous voulions illustrer. Cette mise en oeuvre est illustrée figure 6d avec Nx=4, Ny=4, LNx=2, LNy=2, Xmin et Ymin sur 6 bits : c'est une variante de la réalisation de la figure 6b avec une modification du mode de rangement.

Remarquons que l'on peut rendre la figure 6d plus facile à lire en décroisant les fils sans moindrement modifier le dispositif. On obtient alors la figure 6e.

Bien d'autres modes de rangement sont possibles. Les variantes les plus simples consistent par exemple à changer les signes dans les formules ou changer l'ordre des PEs. Il est impossible de les mentionner toutes.

**Revendications**

1. Processeur parallèle qui comprend des processeurs élémentaires (3) comprenant chacun au moins une unité de calcul et au moins une mémoire qui comporte des mots-mémoire, et disposés selon une topologie, avec une position déterminée au sein de cette topologie et aptes à exécuter simultanément une même instruction sur des données différentes, l'instruction comportant la lecture d'au moins un opérande et/ou comportant l'écriture d'au moins un résultat, **caractérisé en ce que** l'instruction définit l'ensemble des lectures et/ou l'ensemble des écritures des processeurs élémentaires chacun dans sa propre mémoire comme étant une lecture et/ou une écriture sur un champ d'action, un champ d'action étant un ensemble de mots-mémoire à raison d'un mot-mémoire par processeur élémentaire, ce mot-mémoire étant situé dans la mémoire du processeur élémentaire, un champ d'action d'un opérande étant l'ensemble des mots-mémoires lus par les processeurs élémentaires chacun dans sa propre mémoire pour acquérir cet opérande, un champ d'action d'un résultat étant l'ensemble des mots-mémoires écrits par les processeurs élémentaires chacun dans sa propre mémoire pour stocker ce résultat, **en ce que** l'instruction comprend pour chaque opérande et/ou chaque résultat, des informations relatives à la position de ce champ d'action, **en ce que** la position du champ d'action est définie comme étant une position au sein d'une structure de données unique de type tableau de dimension N, N étant un entier égal ou supérieur à 1, **en ce que** ce tableau est réparti sur les mémoires des différents processeurs élémentaires, et **en ce que** le processeur parallèle comprend des moyens de calcul de l'adresse de chaque opérande et/ou chaque résultat au sein de chaque processeur élémentaire, en fonction de la position du champ d'action et de la position du processeur élémentaire au sein de la topologie.

2. Processeur parallèle selon la revendication précédente, **caractérisé en ce qu'**il comprend des moyens (50) de calcul de la position du champ d'action en fonction desdites informations, reliés aux moyens de calcul de l'adresse.

3. Processeur parallèle selon l'une des revendications précédentes, **caractérisé en ce que** les moyens (41, 42, 43) de calcul de l'adresse au sein de chaque processeur élémentaire sont localisés au niveau de chaque processeur élémentaire.

4. Processeur parallèle selon la revendication précédente, **caractérisé en ce que** les moyens (41, 42, 43) de calcul de l'adresse au sein de chaque processeur élémentaire sont localisés au niveau de l'unité de calcul (31) de chaque processeur élémentaire.

5. Processeur parallèle selon l'une des revendications précédentes, **caractérisé en ce que** les moyens de calcul de l'adresse au sein de chaque processeur élémentaire sont partiellement localisés au niveau de chaque processeur élémentaire et partiellement regroupés entre plusieurs processeurs élémentaires.

6. Processeur parallèle selon l'une des revendications précédentes prise en combinaison avec la revendication 2, **caractérisé en ce que** les moyens de calcul de la position du champ d'action sont :

   - communs à tous les processeurs élémentaires ou
   - localisés en totalité ou en partie au niveau des moyens de calcul de l'adresse des données.

7. Processeur parallèle selon l'une des revendications précédentes, **caractérisé en ce que** les processeurs élémentaires sont disposés selon une topologie à P dimensions, P étant un entier supérieur ou égal à 1.

8. Processeur parallèle selon l'une des revendications précédentes, **caractérisé en ce que** les processeurs élémentaires étant disposés selon une topologie à au moins une dimension, pour chaque dimension les moyens de calcul de l'adresse de l'élément de la structure de données qui concerne un processeur élémentaire d'abscisse p selon ladite dimension sont obtenus par combinaison d'une valeur liée à la position du champ et d'une valeur liée à la position du processeur élémentaire.

9. Processeur parallèle selon l'une des revendications précédentes, **caractérisé en ce que** le champ d'action présentant des extrémités définies par leurs coordonnées, la position du champ d'action est définie par la position d'un barycentre obtenu par combinaison linéaire de ces extrémités, la somme des poids des extrémités étant égal à 1.

10. Processeur parallèle selon l'une des revendications précédentes, **caractérisé en ce que** le champ d'action présentant des extrémités définies par leurs coordonnées, la position du champ d'action est définie par la position de l'extrémité dont les coordonnées sont minimales.

11. Processeur parallèle selon la revendication précédente, **caractérisé en ce que** les processeurs étant disposés selon une topologie à au moins une dimension, pour chaque dimension les moyens de calcul de l'adresse de l'élément de la structure de données qui concerne un PE d'abscisse p selon ladite dimension comprennent des moyens de calcul de :

$$Ad = Int((Wmin + Np - 1 - p) / Np),$$

Np étant le nombre de processeurs élémentaires considéré sur ladite dimension, Wmin étant défini sur ladite dimension en fonction des coordonnées de ladite position.

12. Processeur parallèle selon la revendication précédente, **caractérisé en ce que** les processeurs sont disposés selon une topologie à une dimension et la structure de données est monodimensionnelle et **en ce que** la position du champ d'action est définie par Xmin et Wmin =Xmin.

13. Processeur parallèle selon la revendication précédente, **caractérisé en ce que** Np étant une puissance de 2, les moyens de calcul de Ad comportent des moyens pour :

  - Additionner Xmin et (Np-1-p),
  - Supprimer les LNp derniers bits du résultat, LNp étant le logarithme à base 2 de Np.

14. Processeur parallèle selon la revendication 10, **caractérisé en ce que** les processeurs sont disposés selon une topologie à une dimension, et la structure de données est bidimensionnelle, définie en fonction de X et Y, la dimension de la structure selon X étant inférieure à une valeur prédéterminée Lx et **en ce que** la position du champ d'action est définie par Xmin, Ymin et Wmin =Xmin + Lx * Ymin.

15. Processeur parallèle selon la revendication précédente, **caractérisé en ce que** Np et Lx étant des puissances de 2, les moyens de calcul de Ad comportent des moyens pour :

  - Additionner Xmin et (Np-1-p),
  - Supprimer les LNp derniers bits du résultat, LNp étant le logarithme à base 2 de Np,
  - Concaténer en poids faible la quantité précédente représentée sur LLx-LNp bits et en poids fort Ymin, LLx étant le logarithme à base 2 de Lx.

16. Processeur parallèle selon la revendication 10, **caractérisé en ce que** les processeurs sont disposés selon une topologie à une dimension, et la structure de données est tridimensionnelle, définie en fonction de X, Y et Z, les dimensions de la structure selon X et Y étant respectivement inférieures à des valeurs prédéterminées Lx et Ly et **en ce que** la position du champ d'action est définie par Xmin, Ymin, Zmin et Wmin = Xmin + Lx * (Ymin+ Ly * Zmin).

17. Processeur parallèle selon la revendication précédente, **caractérisé en ce que** Np, Lx et Ly étant des puissances de 2, les moyens de calcul de Ad comportent des moyens pour :

  - Additionner Xmin et (Np-1-p),
  - Supprimer les LNp derniers bits du résultat, LNp étant le logarithme à base 2 de Np,
  - Concaténer en poids faible la quantité précédente représentée sur LLx-LNp bits, en poids moyen Ymin représenté sur Ly bits et en poids fort Zmin représenté sur Lz bits, LLx étant le logarithme à base 2 de Lx.

18. Processeur parallèle selon la revendication 10, **caractérisé en ce que** les processeurs sont disposés selon une topologie à une dimension, et la structure de données est à 4 dimensions, définie en fonction de X, Y, Z et T, les dimensions de la structure selon X, Y et Z étant respectivement inférieures à des valeurs prédéterminées Lx, Ly et Lz et **en ce que** la position du champ d'action est définie par Xmin, Ymin, Zmin, Tmin et Wmin = Xmin + Lx * (Ymin+ Ly * (Zmin + Lz * Tmin)).

19. Processeur parallèle selon la revendication 10, **caractérisé en ce que** les processeurs sont disposés selon une topologie à deux dimensions, et comprend respectivement Nx et Ny processeurs selon l'une et l'autre dimension, la structure de données est bidimensionnelle, définie en fonction de X et Y, la dimension de la structure selon X étant inférieure à une valeur prédéterminée Lx et **en ce que** la position du champ d'action est définie par Xmin, Ymin, et

- l'adresse Adx de l'élément qui concerne le PE n° px considéré selon X au sein du champ est obtenue par la formule

$$Adx = Int((Xmin + Nx - 1 - px) / Nx),$$

- et l'adresse Ady de l'élément qui concerne le PE n° py considéré selon Y au sein du champ est obtenue par la formule

$$Ady = Int((Ymin + Ny - 1 - py) / Ny).$$

20. Processeur parallèle selon la revendication précédente, **caractérisé en ce que** Nx, Ny, Lx et Ly étant des puissances de 2, LLx et LLy étant respectivement le logarithme à base 2 de Lx et Ly, les moyens de calcul de Ad comportent des moyens pour :

- Additionner Xmin et (Nx-1-px),
- Supprimer les LNx derniers bits du résultat, LNx étant le logarithme à base 2 de Nx, on obtient Adx sur LLx-LNx bits,
- Additionner Ymin et (Ny-1-py),
- Supprimer les LNy derniers bits du résultat, LNy étant le logarithme à base 2 de Ny, on obtient Ady sur LLy-LNy bits,
- Concaténer en poids faible Adx représentée sur LLx-LNx bits, et en poids fort Ady représenté LLy-LNy bits.

21. Processeur parallèle selon la revendication 10, **caractérisé en ce que** les processeurs sont disposés selon une topologie à au moins trois dimensions, et comprend respectivement Nx, Ny, Nz, ... processeurs selon chaque dimension, la structure de données est définie sur au moins trois dimensions en fonction de X, Y, Z, ..., la dimension de la structure selon chacune des dimensions étant inférieure à une valeur prédéterminée Lx, Ly, Lz, ... , et Nx, Ny, Nz,..., Lx, Ly, Lz, ... étant des puissances de 2, LLx, LLy, LLz ... étant les logarithmes à base 2 de Lx, Ly, Lz, ..., les moyens de calcul de Ad comportent des moyens pour:

- Concaténer sur un mot unique de LLx + LLy + LLz + ... bits les différentes coordonnées du point utilisé pour définir la position du champ ; on obtient w,
- permuter l'ordre des bits de w ; soit w' le mot obtenu
- découper w' en mots de taille LLx, LLy, LLz, ... bits; soient wx', wy', wz', ... les mots obtenus,
- Appliquer dans chacune des dimensions

  i. ajouter (Nx -1 - px) à wx',
  *ii.* supprimer les LNx derniers bits du résultat ;on obtient Adx',
  iii. ajouter (Ny-1-py) à wy',
  iv. supprimer les LNy derniers bits du résultat ; on obtient Ady',
  *v.* et ainsi de suite dans chaque direction,

- Permuter à nouveau l'ordre des bits de Adx', Ady', Adz', ... ; on obtient alors les adresses de rangement Adx, Ady, Adz dans chacune des directions,
- Concaténer ces adresses sur un mot unique Ad qui représente l'adresse concernée par le champ au sein de chaque PE.

22. Processeur parallèle selon l'une des revendications précédentes, **caractérisé en ce que** le processeur parallèle est un calculateur de type SIMD.

**Claims**

1. A parallel processor that comprises elementary processors (3) that each comprise at least one calculating unit and at least one memory that comprises memory-words, and are each disposed according to a topology, with a position that is determined within this topology, and are designed to simultaneously execute the same instruction on different data, said instruction comprising the reading of at least one operand and/or comprising the writing of at least one result, **characterised in that** said instruction defines the whole of the readings and/or the whole of the writings of the elementary processors, each in its own memory, as being a reading and/or a writing in a field of action, a field of action being a set of memory-words based on one memory-word per elementary processor, said memory-word being located in the memory of the elementary processor, a field of action of an operand being the whole of the memory-words that is read by the elementary processor, each in its own memory, in order to acquire this operand, a field of action of a result being the whole of the memory-words that is written by the elementary processor, each in its own memory, so as to store this result, **in that** the instruction comprises, for each operand and/or each result, information relating to the position of this field of action, **in that** the position of the field of action is defined as being a position within a unique data structure of a table type with N dimensions, N being an integer that is greater than or equal to 1, **in that** this table is distributed over the memories of the various elementary processors, and **in that** the parallel processor comprises means for calculating the address of each operand and/or each result within each elementary processor as a function of the position of the field of action and the position of the elementary processor within the topology.

2. The parallel processor according to the preceding claim, **characterised in that** it comprises means (50) for calculating the position of the field of action as a function of said information, which means are connected to means for calculating the address.

3. The parallel processor according to any one of the preceding claims, **characterised in that** the means (41, 42, 43) for calculating the address within each elementary processor are located at each elementary processor.

4. The parallel processor according to the preceding claim, **characterised in that** the means (41, 42, 43) for calculating the address within each elementary processor are located at the calculating unit (31) of each elementary processor.

5. The parallel processor according to any one of the preceding claims, **characterised in that** the means for calculating the address within each elementary processor are partially located at each elementary processor and partially grouped between a plurality of elementary processors.

6. The parallel processor according to any one of the preceding claims in combination with claim 2, **characterised in that** the means for calculating the position of the field of action are:

    - common to all of the elementary processors or
    - fully or partly located at the means for calculating the address of the data.

7. The parallel processor according to any one of the preceding claims, **characterised in that** the elementary processors are disposed according to a topology with P dimensions, P being an integer that is greater than or equal to 1.

8. The parallel processor according to any one of the preceding claims, **characterised in that**, as the elementary processor is disposed according to a topology with at least one dimension, for each dimension the means for calculating the address of the element of the data structure that relates to an elementary processor of abscissa p according to said dimension are obtained by combining a value that is associated with the position of the field and a value that is associated with the position of the elementary processor.

9. The parallel processor according to any one of the preceding claims, **characterised in that**, as the field of action has ends that are defined by their coordinates, the position of the field of action is defined by the position of a centre of gravity that is obtained by a linear combination of these ends, the sum of the order of the ends being equal to 1.

10. The parallel processor according to any one of the preceding claims, **characterised in that**, as the field of action has ends that are defined by their coordinates, the position of the field of action is defined by the position of the end with the minimum coordinates.

11. The parallel processor according to the preceding claim, **characterised in that**, as the processors are disposed according to a topology with at least one dimension, for each dimension the means for calculating the address of the element of the data structure that relates to an EP of abscissa p according to said dimension comprises means for calculating:

$$Ad = Int((Wmin + Np - 1 - p)/Np),$$

Np being the number of elementary processors that is considered on said dimension, Wmin being defined on said dimension as a function of the coordinates of said position.

12. The parallel processor according to the preceding claim, **characterised in that** the processors are disposed according to a topology with one dimension and the data structure is mono-dimensional, and **in that** the position of the field of action is defined by Xmin and Wmin = Xmin.

13. The parallel processor according to the preceding claim, **characterised in that**, as Np is a power of 2, the means for calculating Ad comprise means for:

    - adding Xmin and (Np-1-p),
    - deleting the LNp final bits from the result, LNp being the base 2 logarithm ofNp.

14. The parallel processor according to claim 10, **characterised in that** the processors are disposed according to a topology with one dimension, and the data structure is twodimensional, defined as a function of X and Y, the dimension of the structure along X being less than a predetermined value Lx, and **in that** the position of the field of action is defined by Xmin, Ymin and Wmin=Xmin + Lx * Ymin.

15. The parallel processor according to the preceding claim, **characterised in that**, as Np and Lx are powers of 2, the means for calculating Ad comprise means for:

    - adding Xmin and (Np-1-p),
    - deleting the LNp final bits from the result, LNp being the base 2 logarithm of Np,
    - low-order concatenating the preceding quantity represented on LLx-LNp bits and high-order concatenating Ymin, LLx being the base 2 logarithm of Lx.

16. The parallel processor according to claim 10, **characterised in that** the processors are disposed according to a topology with one dimension, and the data structure is three-dimensional, defined as a function of X, Y and Z, the dimensions of the structure along X and Y being respectively less than the predetermined values Lx and Ly, and **in that** the position of the field of action is defined by Xmin, Ymin and Wmin=Xmin + Lx * (Ymin + Ly * Zmin).

17. The parallel processor according to the preceding claim, **characterised in that**, as Np, Lx and Ly are powers of 2, the means for calculating Ad comprise means for:

    - adding Xmin and (Np-1-p),
    - deleting the LNp final bits from the result, LNp being the base 2 logarithm of Np,
    - low-order concatenating the preceding quantity represented on LLx-LNp bits, mid-order concatenating Ymin represented on Ly bits and high-order concatenating Zmin represented on Lz bits, LLx being the base 2 logarithm of Lx.

18. The parallel processor according to claim 10, **characterised in that** the processors are disposed according to a topology with one dimension, and the data structure is 4 dimensional, defined as a function of X, Y, Z and T, the dimensions of the structure along X, Y and Z being respectively less than the predetermined values Lx, Ly and Lz, and **in that** the position of the field of action is defined by Xmin, Ymin, Zmin, Tmin and Wmin = Xmin + Lx * (Ymin + Ly * (Zmin + Lz * Tmin)).

19. The parallel processor according to claim 10, **characterised in that** the processors are disposed according to a topology with two dimensions and respectively comprise Nx and Ny processors along one and the other dimensions, the data structure is twodimensional, defined as a function of X and Y, the dimension of the structure along X being less than a predetermined value Lx, and **in that** the position of the field of action is defined by Xmin, Ymin, and

    - the address Adx of the element that relates to the EP No. px that is considered along X within the field is obtained by the formula:

EP 2 162 829 B1

$$Adx = Int((Xmin + Nx - 1 - px) / Nx),$$

- and the address Ady of the element that relates to the EP No. py that is considered along Y within the field is obtained by the formula:

$$Ady = Int((Ymin + Ny - 1 - py) / Ny).$$

20. The parallel processor according to the preceding claim, **characterised in that**, as Nx, Ny, Lx and Ly are powers of 2, LLx and LLy being respectively the base 2 logarithm of Lx and Ly, the means for calculating Ad comprise means for:

- adding Xmin and (Nx-1-px),
- deleting the LNx final bits from the result, LNx being the base 2 logarithm ofNx, Adx is obtained on LLx-LNx bits,
- adding Ymin and (Ny-1-py),
- deleting the LNy final bits from the result, LNy being the base 2 logarithm of Ny, Ady is obtained on LLy-LNy bits,
- low-order concatenating Adx represented on LLx-LNp bits, high-order concatenating Ady represented by LLy-LNy bits.

21. The parallel processor according to claim 10, **characterised in that** the processors are disposed according to a topology with at least three dimensions, and respectively comprises Nx, Ny, Nz,... processors along each dimension, the data structure is defined on at least three dimensions as a function of X, Y, Z,..., the dimension of the structure along each of the dimensions being less than a predetermined value Lx, Ly, Lz,..., and Nx, Ny, Nz, ..., Lx, Ly, Lz,... being powers of 2, LLx, LLy, LLz, ...being the base 2 logarithms of Lx, Ly, Lz,..., the means for calculating Ad comprising means for:

- concatenating on a single word of LLx + LLy + LLz + ... bits the different coordinates of the point used to define the position of the field; so that w is obtained,
- permutating the order of the bits of w; so that w' is obtained,
- splitting w' into words of size LLx, LLy, LLz, ...bits; so that the words wx', wy', wz', ..., are obtained,
- applying in each of the dimensions

    i. adding (Nx - 1 - px) to wx',
    ii. deleting the LNx last bits from the result; so that Adx' is obtained,
    iii. adding (Ny - 1 - py) to wy',
    iv. deleting the LNy last bits from the result; so that Ady' is obtained,
    v. and so on in each direction,

    - re-permutating the order of the bits of Adx', Ady', Adz',...; the storage addresses Adx, Ady, Adz are then obtained in each of the directions,
    - concatenating these addresses on a single word Ad that represents the address relating to the field within each EP.

22. The parallel processor according to any one of the preceding claims, **characterised in that** the parallel processor is an SIMD type computer.

**Patentansprüche**

1. Parallelprozessor, der Elementarprozessoren (3) umfasst, die jeweils wenigstens eine Recheneinheit und wenigstens einen Speicher umfassen, der Speicherwörter umfasst, und die gemäß einer Topologie angeordnet sind, mit einer vorbestimmten Position im Innern dieser Topologie und so ausgelegt, dass sie gleichzeitig denselben Befehl an verschiedenen Daten ausführen können, wobei der Befehl das Lesen von wenigstens einem Operanden und/ oder das Schreiben von wenigstens einem Ergebnis beinhaltet, **dadurch gekennzeichnet, dass** der Befehl alle Lese- und/oder Schreibvorgänge der Elementarprozessoren jeweils in ihrem eigenen Speicher als Lesen und/oder Schreiben auf ein Aktionsfeld definiert, wobei ein Aktionsfeld ein Satz von Speicherwörtern aufgrund eines Speicherworts pro Elementarprozessor ist, wobei sich dieses Speicherwort im Speicher des Elementarprozessors befindet, wobei ein Aktionsfeld eines Operanden das Ganze der Speicherwörtern ist, die von den Elementarprozessoren jeweils in ihrem eigenen Speicher gelesen wurden, um diesen Operanden zu erfassen, wobei ein Aktionsfeld eines Ergebnisses das Ganze der Speicherwörtern ist, die von den Elementarprozessoren jeweils in ihrem eigenen Speicher geschrieben wurden, um dieses Ergebnis zu speichern, und dadurch, dass der Befehl für jeden Operanden und/oder jedes Ergebnis Informationen in Bezug auf die Position des Aktionsfeldes umfasst, und dadurch, dass die Position des Aktionsfeldes als eine Position im Innern einer eindeutigen Datenstruktur des Tabellentyps mit Dimension N ist, wobei N eine ganze Zahl gleich oder größer als 1 ist, dadurch, dass diese Tabelle auf die Speicher der verschiedenen Elementarprozessoren verteilt ist, und dadurch, dass der Parallelprozessor Mittel zum Berechnen der Adresse jedes Operanden und/oder jedes Ergebnisses im Innern jedes Elementarprozessors in Abhängigkeit von der Position des Aktionsfeldes und der Position des Elementarprozessors im Innern der Topologie umfasst.

2. Parallelprozessor nach dem vorherigen Anspruch, **dadurch gekennzeichnet, dass** er Mittel (50) zum Berechnen der Position des Aktionsfelds in Abhängigkeit von den Informationen umfasst, die mit den Mitteln zum Berechnen der Adresse verbunden sind.

3. Parallelprozessor nach einem der vorherigen Ansprüche, **dadurch gekennzeichnet, dass** sich die Mittel (41, 42, 43) zum Berechnen der Adresse im Innern jedes Elementarprozessors an jedem Elementarprozessor befinden.

4. Parallelprozessor nach dem vorherigen Anspruch, **dadurch gekennzeichnet, dass** sich die Mittel (41, 42, 43) zum Berechnen der Adresse im Innern jedes Elementarprozessors an der Recheneinheit (31) jedes Elementarprozessors befinden.

5. Parallelprozessor nach einem der vorherigen Ansprüche, **dadurch gekennzeichnet, dass** sich die Mittel zum Berechnen der Adresse im Innern jedes Elementarprozessors zum Teil an jedem Elementarprozessor und zum Teil zwischen mehreren Elementarprozessoren gruppiert befinden.

6. Parallelprozessor nach einem der vorherigen Ansprüche in Kombination mit Anspruch 2, **dadurch gekennzeichnet, dass** die Mittel zum Berechnen der Position des Aktionsfeldes Folgendes sind:

   - allen Elementarprozessoren gemeinsam, oder
   - ganz oder teilweise an den Mitteln zum Berechnen der Adresse der Daten positioniert.

7. Parallelprozessor nach einem der vorherigen Ansprüche, **dadurch gekennzeichnet, dass** die Elementarprozessoren gemäß einer Topologie mit P Dimensionen angeordnet sind, wobei P eine ganze Zahl gleich oder größer als 1 ist.

8. Parallelprozessor nach einem der vorherigen Ansprüche, **dadurch gekennzeichnet, dass**, da die Elementarprozessoren gemäß einer Topologie mit wenigstens einer Dimension angeordnet sind, für jede Dimension die Mittel zum Berechnen der Adresse des Elements der Datenstruktur, die einen Elementarprozessor von Abszisse P gemäß der Dimension betrifft, durch Kombinieren eines mit der Position des Feldes verbundenen Wertes und eines mit der Position des Elementarprozessors verbundenen Wertes erhalten werden.

9. Parallelprozessor nach einem der vorherigen Ansprüche, **dadurch gekennzeichnet, dass**, da das Aktionsfeld durch ihre Koordinaten definierte Enden aufweist, die Position des Aktionsfelds durch die Position eines Baryzentrums definiert wird, das durch lineares Kombinieren seiner Enden erhalten wird, wobei die Summe der Wertigkeiten der Enden gleich 1 ist.

10. Parallelprozessor nach einem der vorherigen Ansprüche, **dadurch gekennzeichnet, dass**, da das Aktionsfeld durch ihre Koordinaten definierte Enden aufweist, die Position des Aktionsfelds durch die Position des Endes definiert wird, dessen Koordinaten minimal sind.

11. Parallelprozessor nach dem vorherigen Anspruch, **dadurch gekennzeichnet, dass**, da die Prozessoren gemäß einer Topologie mit wenigstens einer Dimension angeordnet sind, für jede Dimension die Mittel zum Berechnen der Adresse des Elementes der Datenstruktur, die einen EP von Abszisse p gemäß der Dimension betreffen, Mittel zum Berechnen von Folgendem umfassen:

$$Ad = Int((Wmin + Np - 1 - p) / Np),$$

wobei Np die Zahl der Elementarprozessoren ist, die auf der Dimension betrachtet werden, wobei Wmin auf der Dimension in Abhängigkeit von den Koordinaten der Position definiert wird.

12. Parallelprozessor nach dem vorherigen Anspruch, **dadurch gekennzeichnet, dass** die Prozessoren gemäß einer Topologie mit einer Dimension angeordnet sind und die Datenstruktur eindimensional ist, und dadurch, dass die Position des Aktionsfelds durch Xmin und Wmin = Xmin definiert wird.

13. Parallelprozessor nach dem vorherigen Anspruch, **dadurch gekennzeichnet, dass**, da Np eine Zweierpotenz ist, die Mittel zum Berechnen von Ad Mittel umfassen zum:

   - Addieren von Xmin und (Np - 1 - p),
   - Löschen der LNp letzten Bits des Ergebnisses, wobei LNp der Logarithmus mit Basis 2 von Np ist.

14. Parallelprozessor nach Anspruch 10, **dadurch gekennzeichnet, dass** die Prozessoren gemäß einer Topologie mit einer Dimension angeordnet sind und die Datenstruktur zweidimensional ist, definiert in Abhängigkeit von X und Y, wobei die Dimension der Struktur gemäß X kleiner als ein vorbestimmter Wert Lx ist, und dadurch, dass die Position des Aktionsfeldes durch Xmin, Ymin und Wmin = Xmin + Lx * Ymin, definiert ist.

15. Parallelprozessor nach dem vorherigen Anspruch, **dadurch gekennzeichnet, dass**, da Np und Lx Zweierpotenzen sind, die Mittel zum Berechnen von Ad Mittel beinhalten zum:

   - Addieren von Xmin und (Np - 1 - p),
   - Löschen der LNp letzten Bits des Ergebnisses, wobei LNp der Logarithmus mit Basis 2 von Np ist,
   - niederwertiges Verketten der vorherigen Menge, die auf LLx-LNp Bits repräsentiert wird, und hochwertiges Verketten von Ymin, wobei LLx der Logarithmus mit Basis 2 von Lx ist.

16. Parallelprozessor nach Anspruch 10, **dadurch gekennzeichnet, dass** die Prozessoren gemäß einer Topologie mit einer Dimension angeordnet sind und die Datenstruktur dreidimensional ist, definiert in Abhängigkeit von X, Y und Z, wobei die Dimensionen der Struktur gemäß X und Y jeweils kleiner als vorbestimmte Werte Lx und Ly sind, und dadurch, dass die Position des Aktionsfelds durch Xmin, Ymin, Zmin und Wmin = Xmin + Lx * (Ymin + Ly * Zmin) definiert ist.

17. Parallelprozessor nach dem vorherigen Anspruch, **dadurch gekennzeichnet, dass**, da Np, Lx und Ly Zweierpotenzen sind, die Mittel zum Berechnen von Ad Mittel umfassen zum:

   - Addieren von Xmin und (Np - 1 - p),
   - Löschen der LNp letzten Bits des Ergebnisses, wobei LNp der Logarithmus mit Basis 2 von Np ist,
   - niederwertiges Verketten der vorherigen Menge, die auf LLx-LNp Bits repräsentiert ist, mittelwertiges Verketten von Ymin, das auf Ly Bits repräsentiert ist, und hochwertiges Verketten von Zmin, das auf Lz Bits repräsentiert ist, wobei LLx der Logarithmus mit Basis 2 von Lx ist.

18. Parallelprozessor nach Anspruch 10, **dadurch gekennzeichnet, dass** die Prozessoren gemäß einer Topologie mit einer Dimension angeordnet sind und die Datenstruktur vier Dimensionen hat, definiert in Abhängigkeit von X, Y, Z und T, wobei die Dimensionen der Struktur gemäß X, Y und Z jeweils kleiner als vorbestimmte Werte Lx, Ly und Lz sind, und dadurch, dass die Position des Aktionsfeldes durch Xmin, Ymin, Zmin, Tmin und Wmin = Xmin + Lx * (Ymin + Ly * (Zmin + Lz * Tmin)) definiert ist.

19. Parallelprozessor nach Anspruch 10, **dadurch gekennzeichnet, dass** die Prozessoren gemäß einer Topologie mit zwei Dimensionen angeordnet sind und jeweils Nx und Ny Prozessoren gemäß der einen und der anderen Dimension umfassen, die Datenstruktur zweidimensional ist, definiert in Abhängigkeit von X und Y, die Dimension der Struktur gemäß X kleiner als ein vorbestimmter Wert Lx ist, und dadurch, dass die Position des Aktionsfeldes durch Xmin, Ymin definiert ist, und

   - die Adresse Adx des Elementes, das den EP Nr. px betrifft, der gemäß X im Innern des Feldes betrachtet wird, mit der folgenden Formel erhalten wird:

$$Adx = Int((Xmin + Nx - 1 - px) / Nx),$$

- und die Adresse Ady des Elementes, das den EP Nr. py betrifft, der gemäß Y im Innern des Feldes betrachtet wird, mit der folgenden Formel erhalten wird:

$$Ady = Int((Ymin + Ny - 1 - py) / Ny).$$

**20.** Parallelprozessor nach dem vorherigen Anspruch, **dadurch gekennzeichnet, dass**, da Nx, Ny, Lx und Ly Zweierpotenzen sind, wobei LLx und LLy jeweils der Logarithmus mit Basis 2 von Lx und Ly sind, die Mittel zum Berechnen von Ad Mittel umfassen zum:

- Addieren von Xmin und (Nx-1-px),
- Löschen der LNx letzten Bits des Ergebnisses, wobei LNx der Logarithmus mit Basis 2 von Nx ist, daher wird Adx auf LLx-LNx Bits erhalten,
- Addieren von Ymin und (Ny-1-py),
- Löschen der LNy letzten Bits des Ergebnisses, wobei LNy der Logarithmus mit Basis 2 von Ny ist, daher wird Ady auf LLy-LNy Bits erhalten,
- niederwertiges Verketten von Adx, das auf LLx-LNx Bits repräsentiert ist, und hochwertiges Verketten von Ady, das auf LLy-LNy Bits repräsentiert ist.

**21.** Parallelprozessor nach Anspruch 10, **dadurch gekennzeichnet, dass** die Prozessoren gemäß einer Topologie mit wenigstens drei Dimensionen angeordnet sind und jeweils Nx, Ny, Nz, ... Prozessoren gemäß jeder Dimension umfassen, die Datenstruktur auf wenigstens drei Dimensionen in Abhängigkeit von X, Y, Z, ... definiert ist, die Dimension der Struktur gemäß jeder der Dimensionen kleiner als ein vorbestimmter Wert Lx, Ly, Lz, ... ist und, da Nx, Ny, Nz, ..., Lx, Ly, Lz, ... Zweierpotenzen sind, wobei LLx, LLy, LLz, ... Logarithmen mit Basis 2 von Lx, Ly, Lz, ... sind, die Mittel zum Berechnen von Ad Mittel umfassen zum:

- Verketten auf einem einzigen Wort von LLx + LLy + LLz + ... Bits der verschiedenen Koordinaten des zum Definieren der Position des Feldes verwendeten Punkts; man erhält w,
- Vertauschen der Reihenfolge der Bits von w; d.h. es wird das Wort w' erhalten;
- Unterteilen von w' in Wörter der Größe LLx, LLy, LLz, ... Bits; d.h. es werden die Wörter wx', wy', wz', ... erhalten,
- in jeder der Dimensionen Anwenden von Folgendem:

  i. Hinzufügen von (Nx - 1 - px) zu wx',
  ii. Löschen der LNx letzten Bits des Ergebnisses; man erhält Adx,',
  iii. Hinzufügen von (Ny - 1 - py) zu wy',
  iv. Löschen der LNy letzten Bits des Ergebnisses; man erhält Ady',
  v. usw. in jeder Richtung,

- erneutes Vertauschen der Reihenfolge der Bits von Adx', Ady', Adz', ...; man erhält somit die Anordnungsadressen Adx, Ady, Adz in jeder Richtung,
- Verketten dieser Adressen zu einem einzigen Wort Ad, das die das Feld im Innern jedes EP betroffene Adresse repräsentiert.

**22.** Parallelprozessor nach einem der vorherigen Ansprüche, **dadurch gekennzeichnet, dass** der Parallelprozessor ein Rechner des SIMD-Typs ist.

FIG.1

| | | 0 | 1 | 2 | 3 | 4 | 5 | 6 | 7 | 8 | 9 | 10 | 11 | 12 | 13 | 14 | 15 | ... | 63 |
|---|---|---|---|---|---|---|---|---|---|---|---|---|---|---|---|---|---|---|---|
| P0 | 0 | 0 | 1 | 2 | 3 | 4 | 5 | 6 | 7 | 8 | 9 | 10 | 11 | 12 | 13 | 14 | 15 | ... | 63 |
| P1 | 1 | 0 | 1 | 2 | 3 | 4 | 5 | 6 | 7 | 8 | 9 | 10 | 11 | 12 | 13 | 14 | 15 | ... | 63 |
| P2 | 2 | 0 | 1 | 2 | 3 | 4 | 5 | 6 | 7 | 8 | 9 | 10 | 11 | 12 | 13 | 14 | 15 | ... | 63 |
| P3 | 3 | 0 | 1 | 2 | 3 | 4 | 5 | 6 | 7 | 8 | 9 | 10 | 11 | 12 | 13 | 14 | 15 | ... | 63 |
| P4 | 4 | 0 | 1 | 2 | 3 | 4 | 5 | 6 | 7 | 8 | 9 | 10 | 11 | 12 | 13 | 14 | 15 | ... | 63 |
| P5 | 5 | 0 | 1 | 2 | 3 | 4 | 5 | 6 | 7 | 8 | 9 | 10 | 11 | 12 | 13 | 14 | 15 | ... | 63 |
| P6 | 6 | 0 | 1 | 2 | 3 | 4 | 5 | 6 | 7 | 8 | 9 | 10 | 11 | 12 | 13 | 14 | 15 | ... | 63 |
| P7 | 7 | 0 | 1 | 2 | 3 | 4 | 5 | 6 | 7 | 8 | 9 | 10 | 11 | 12 | 13 | 14 | 15 | ... | 63 |
| P8 | 8 | 0 | 1 | 2 | 3 | 4 | 5 | 6 | 7 | 8 | 9 | 10 | 11 | 12 | 13 | 14 | 15 | ... | 63 |
| P9 | 9 | 0 | 1 | 2 | 3 | 4 | 5 | 6 | 7 | 8 | 9 | 10 | 11 | 12 | 13 | 14 | 15 | ... | 63 |
| P10 | 10 | 0 | 1 | 2 | 3 | 4 | 5 | 6 | 7 | 8 | 9 | 10 | 11 | 12 | 13 | 14 | 15 | ... | 63 |
| P11 | 11 | 0 | 1 | 2 | 3 | 4 | 5 | 6 | 7 | 8 | 9 | 10 | 11 | 12 | 13 | 14 | 15 | ... | 63 |
| P12 | 12 | 0 | 1 | 2 | 3 | 4 | 5 | 6 | 7 | 8 | 9 | 10 | 11 | 12 | 13 | 14 | 15 | ... | 63 |
| P13 | 13 | 0 | 1 | 2 | 3 | 4 | 5 | 6 | 7 | 8 | 9 | 10 | 11 | 12 | 13 | 14 | 15 | ... | 63 |
| P14 | 14 | 0 | 1 | 2 | 3 | 4 | 5 | 6 | 7 | 8 | 9 | 10 | 11 | 12 | 13 | 14 | 15 | ... | 63 |
| P15 | 15 | 0 | 1 | 2 | 3 | 4 | 5 | 6 | 7 | 8 | 9 | 10 | 11 | 12 | 13 | 14 | 15 | ... | 63 |
| P0 | 16 | 64 | 65 | 66 | 67 | 68 | 69 | 70 | 71 | 72 | 73 | 74 | 75 | 76 | 77 | 78 | 79 | ... | 127 |
| P1 | 17 | 64 | 65 | 66 | 67 | 68 | 69 | 70 | 71 | 72 | 73 | 74 | 75 | 76 | 77 | 78 | 79 | ... | 127 |
| P2 | 18 | 64 | 65 | 66 | 67 | 68 | 69 | 70 | 71 | 72 | 73 | 74 | 75 | 76 | 77 | 78 | 79 | ... | 127 |
| P3 | 19 | 64 | 65 | 66 | 67 | 68 | 69 | 70 | 71 | 72 | 73 | 74 | 75 | 76 | 77 | 78 | 79 | ... | 127 |
| P4 | 20 | 64 | 65 | 66 | 67 | 68 | 69 | 70 | 71 | 72 | 73 | 74 | 75 | 76 | 77 | 78 | 79 | ... | 127 |
| P5 | 21 | 64 | 65 | 66 | 67 | 68 | 69 | 70 | 71 | 72 | 73 | 74 | 75 | 76 | 77 | 78 | 79 | ... | 127 |
| P6 | 22 | 64 | 65 | 66 | 67 | 68 | 69 | 70 | 71 | 72 | 73 | 74 | 75 | 76 | 77 | 78 | 79 | ... | 127 |
| P7 | 23 | 64 | 65 | 66 | 67 | 68 | 69 | 70 | 71 | 72 | 73 | 74 | 75 | 76 | 77 | 78 | 79 | ... | 127 |
| ... | ... | ... | ... | ... | ... | ... | ... | ... | ... | ... | ... | ... | ... | ... | ... | ... | ... | ... | ... |

FIG.2

| | ...P6 | P7 | P8 | P9 | P10 | P11 | P12 | P13 | P14 | P15 | P0 | P1 | P2 | P3 | P4 | P5 | P6 | P7 | P8 | ...P15 |
|---|---|---|---|---|---|---|---|---|---|---|---|---|---|---|---|---|---|---|---|---|
| | ... 6 | 7 | 8 | 9 | 10 | 11 | 12 | 13 | 14 | 15 | 16 | 17 | 18 | 19 | 20 | 21 | 22 | 23 | 24 | ... 63 |
| 0 | ... 0 | 0 | 0 | 0 | 0 | 0 | 0 | 0 | 0 | 0 | 1 | 1 | 1 | 1 | 1 | 1 | 1 | 1 | 1 | ... 3 |
| 1 | ... 4 | 4 | 4 | 4 | 4 | 4 | 4 | 4 | 4 | 4 | 5 | 5 | 5 | 5 | 5 | 5 | 5 | 5 | 5 | ... 7 |
| 2 | ... 8 | 8 | 8 | 8 | 8 | 8 | 8 | 8 | 8 | 8 | 9 | 9 | 9 | 9 | 9 | 9 | 9 | 9 | 9 | ... 11 |
| 3 | ... 12 | 12 | 12 | 12 | 12 | 12 | 12 | 12 | 12 | 12 | 13 | 13 | 13 | 13 | 13 | 13 | 13 | 13 | 13 | ... 15 |
| 4 | ... 16 | 16 | 16 | 16 | 16 | 16 | 16 | 16 | 16 | 16 | 17 | 17 | 17 | 17 | 17 | 17 | 17 | 17 | 17 | ... 19 |
| 5 | ... 20 | 20 | 20 | 20 | 20 | 20 | 20 | 20 | 20 | 20 | 21 | 21 | 21 | 21 | 21 | 21 | 21 | 21 | 21 | ... 23 |
| 6 | ... 24 | 24 | 24 | 24 | 24 | 24 | 24 | 24 | 24 | 24 | 25 | 25 | 25 | 25 | 25 | 25 | 25 | 25 | 25 | ... 27 |
| 7 | ... 28 | 28 | 28 | 28 | 28 | 28 | 28 | 28 | 28 | 28 | 29 | 29 | 29 | 29 | 29 | 29 | 29 | 29 | 29 | ... 31 |
| 8 | ... 32 | 32 | 32 | 32 | 32 | 32 | 32 | 32 | 32 | 32 | 33 | 33 | 33 | 33 | 33 | 33 | 33 | 33 | 33 | ... 35 |
| 9 | ... 36 | 36 | 36 | 36 | 36 | 36 | 36 | 36 | 36 | 36 | 37 | 37 | 37 | 37 | 37 | 37 | 37 | 37 | 37 | ... 39 |
| 10 | ... 40 | 40 | 40 | 40 | 40 | 40 | 40 | 40 | 40 | 40 | 41 | 41 | 41 | 41 | 41 | 41 | 41 | 41 | 41 | ... 43 |
| 11 | ... 44 | 44 | 44 | 44 | 44 | 44 | 44 | 44 | 44 | 44 | 45 | 45 | 45 | 45 | 45 | 45 | 45 | 45 | 45 | ... 47 |
| 12 | ... 48 | 48 | 48 | 48 | 48 | 48 | 48 | 48 | 48 | 48 | 49 | 49 | 49 | 49 | 49 | 49 | 49 | 49 | 49 | ... 51 |
| 13 | ... 52 | 52 | 52 | 52 | 52 | 52 | 52 | 52 | 52 | 52 | 53 | 53 | 53 | 53 | 53 | 53 | 53 | 53 | 53 | ... 55 |
| 14 | ... 56 | 56 | 56 | 56 | 56 | 56 | 56 | 56 | 56 | 56 | 57 | 57 | 57 | 57 | 57 | 57 | 57 | 57 | 57 | ... 59 |
| 15 | ... 60 | 60 | 60 | 60 | 60 | 60 | 60 | 60 | 60 | 60 | 61 | 61 | 61 | 61 | 61 | 61 | 61 | 61 | 61 | ... 63 |
| 16 | ... 64 | 64 | 64 | 64 | 64 | 64 | 64 | 64 | 64 | 64 | 65 | 65 | 65 | 65 | 65 | 65 | 65 | 65 | 65 | ... 67 |
| 17 | ... 68 | 68 | 68 | 68 | 68 | 68 | 68 | 68 | 68 | 68 | 69 | 69 | 69 | 69 | 69 | 69 | 69 | 69 | 69 | ... 71 |
| 18 | ... 72 | 72 | 72 | 72 | 72 | 72 | 72 | 72 | 72 | 72 | 73 | 73 | 73 | 73 | 73 | 73 | 73 | 73 | 73 | ... 75 |
| 19 | ... 76 | 76 | 76 | 76 | 76 | 76 | 76 | 76 | 76 | 76 | 77 | 77 | 77 | 77 | 77 | 77 | 77 | 77 | 77 | ... 79 |
| ... | ... | ... | ... | ... | ... | ... | ... | ... | ... | ... | ... | ... | ... | ... | ... | ... | ... | ... | ... | ... |

FIG.3

Processeurs concernés  **FIG.4a**

| | 0 | 1 | 2 | 3 | 4 | 5 | 6 | 7 | 8 | 9 | 10 | 11 | 12 | 13 | 14 | 15 | ... | 60 | 61 | 62 | 63 |
|---|---|---|---|---|---|---|---|---|---|---|---|---|---|---|---|---|---|---|---|---|---|
| 0 | P0 | P1 | P2 | P3 | P0 | P1 | P2 | P3 | P0 | P1 | P2 | P3 | P0 | P1 | P2 | P3 | ... | P0 | P1 | P2 | P3 |
| 1 | P4 | P5 | P6 | P7 | P4 | P5 | P6 | P7 | P4 | P5 | P6 | P7 | P4 | P5 | P6 | P7 | ... | P4 | P5 | P6 | P7 |
| 2 | P8 | P9 | P10 | P11 | P8 | P9 | P10 | P11 | P8 | P9 | P10 | P11 | P8 | P9 | P10 | P11 | ... | P8 | P9 | P10 | P11 |
| 3 | P12 | P13 | P14 | P15 | P12 | P13 | P14 | P15 | P12 | P13 | P14 | P15 | P12 | P13 | P14 | P15 | ... | P12 | P13 | P14 | P15 |
| 4 | P0 | P1 | P2 | P3 | P0 | P1 | P2 | P3 | P0 | P1 | P2 | P3 | P0 | P1 | P2 | P3 | ... | P0 | P1 | P2 | P3 |
| 5 | P4 | P5 | P6 | P7 | P4 | P5 | P6 | P7 | P4 | P5 | P6 | P7 | P4 | P5 | P6 | P7 | ... | P4 | P5 | P6 | P7 |
| 6 | P8 | P9 | P10 | P11 | P8 | P9 | P10 | P11 | P8 | P9 | P10 | P11 | P8 | P9 | P10 | P11 | ... | P8 | P9 | P10 | P11 |
| 7 | P12 | P13 | P14 | P15 | P12 | P13 | P14 | P15 | P12 | P13 | P14 | P15 | P12 | P13 | P14 | P15 | ... | P12 | P13 | P14 | P15 |
| 8 | P0 | P1 | P2 | P3 | P0 | P1 | P2 | P3 | P0 | P1 | P2 | P3 | P0 | P1 | P2 | P3 | ... | P0 | P1 | P2 | P3 |
| 9 | P4 | P5 | P6 | P7 | P4 | P5 | P6 | P7 | P4 | P5 | P6 | P7 | P4 | P5 | P6 | P7 | ... | P4 | P5 | P6 | P7 |
| 10 | P8 | P9 | P10 | P11 | P8 | P9 | P10 | P11 | P8 | P9 | P10 | P11 | P8 | P9 | P10 | P11 | ... | P8 | P9 | P10 | P11 |
| 11 | P12 | P13 | P14 | P15 | P12 | P13 | P14 | P15 | P12 | P13 | P14 | P15 | P12 | P13 | P14 | P15 | ... | P12 | P13 | P14 | P15 |

Adresses à l'intérieur des processeurs  **FIG.4b**

| | 0 | 1 | 2 | 3 | 4 | 5 | 6 | 7 | 8 | 9 | 10 | 11 | 12 | 13 | 14 | 15 | ... | 60 | 61 | 62 | 63 |
|---|---|---|---|---|---|---|---|---|---|---|---|---|---|---|---|---|---|---|---|---|---|
| 0 | 0 | 0 | 0 | 0 | 1 | 1 | 1 | 1 | 2 | 2 | 2 | 2 | 3 | 3 | 3 | 3 | ... | 15 | 15 | 15 | 15 |
| 1 | 0 | 0 | 0 | 0 | 1 | 1 | 1 | 1 | 2 | 2 | 2 | 2 | 3 | 3 | 3 | 3 | ... | 15 | 15 | 15 | 15 |
| 2 | 0 | 0 | 0 | 0 | 1 | 1 | 1 | 1 | 2 | 2 | 2 | 2 | 3 | 3 | 3 | 3 | ... | 15 | 15 | 15 | 15 |
| 3 | 0 | 0 | 0 | 0 | 1 | 1 | 1 | 1 | 2 | 2 | 2 | 2 | 3 | 3 | 3 | 3 | ... | 15 | 15 | 15 | 15 |
| 4 | 16 | 16 | 16 | 16 | 17 | 17 | 17 | 17 | 18 | 18 | 18 | 18 | 19 | 19 | 19 | 19 | ... | 31 | 31 | 31 | 31 |
| 5 | 16 | 16 | 16 | 16 | 17 | 17 | 17 | 17 | 18 | 18 | 18 | 18 | 19 | 19 | 19 | 19 | ... | 31 | 31 | 31 | 31 |
| 6 | 16 | 16 | 16 | 16 | 17 | 17 | 17 | 17 | 18 | 18 | 18 | 18 | 19 | 19 | 19 | 19 | ... | 31 | 31 | 31 | 31 |
| 7 | 16 | 16 | 16 | 16 | 17 | 17 | 17 | 17 | 18 | 18 | 18 | 18 | 19 | 19 | 19 | 19 | ... | 31 | 31 | 31 | 31 |
| 8 | 32 | 32 | 32 | 32 | 33 | 33 | 33 | 33 | 34 | 34 | 34 | 34 | 35 | 35 | 35 | 35 | ... | 47 | 47 | 47 | 47 |
| 9 | 32 | 32 | 32 | 32 | 33 | 33 | 33 | 33 | 34 | 34 | 34 | 34 | 35 | 35 | 35 | 35 | ... | 47 | 47 | 47 | 47 |
| 10 | 32 | 32 | 32 | 32 | 33 | 33 | 33 | 33 | 34 | 34 | 34 | 34 | 35 | 35 | 35 | 35 | ... | 47 | 47 | 47 | 47 |
| 11 | 32 | 32 | 32 | 32 | 33 | 33 | 33 | 33 | 34 | 34 | 34 | 34 | 35 | 35 | 35 | 35 | ... | 47 | 47 | 47 | 47 |

FIG.5

xmin
12b

12b

12b

4b

15-p

Ad
8b

inutilisé
4b

FIG.6a

ymin
6b

12b

Ad
8b

xmin
6b

6b

inutilisé
4b

4b

15-p

FIG.6b

ymin
6b

6b

Ady
4b

6b

inutilisé
2b

2b

3-py

Ad
8b

xmin
6b

6b

Adx
4b

6b

inutilisé
2b

2b

3-px

FIG.6c

FIG.6d

FIG.6e

**EP 2 162 829 B1**

## RÉFÉRENCES CITÉES DANS LA DESCRIPTION

**Documents brevets cités dans la description**

- GB 2417105 A